(19) Europäisches Patentamt
European Patent Office
Office européen des brevets

(11) EP 1 773 960 B1

(12) **EUROPEAN PATENT SPECIFICATION**

(45) Date of publication and mention of the grant of the patent:
**19.05.2010 Bulletin 2010/20**

(21) Application number: **05763511.2**

(22) Date of filing: **24.06.2005**

(51) Int Cl.:
***C09J 7/02*** *(2006.01)*

(86) International application number:
**PCT/US2005/022757**

(87) International publication number:
**WO 2006/019526 (23.02.2006 Gazette 2006/08)**

(54) **ADHESIVE DELIVERY OF OIL AND WATER REPELLENTS**

KLEBSTOFF ALS VORRATSSPEICHER VON OLEO- UND HYDROPHOBIERMITTELN

ADHESIF LIBERANT DES AGENTS OLEOFUGES ET HYDROFUGES

(84) Designated Contracting States:
**AT BE BG CH CY CZ DE DK EE ES FI FR GB GR HU IE IS IT LI LT LU MC NL PL PT RO SE SI SK TR**

(30) Priority: **15.07.2004 US 891736**

(43) Date of publication of application:
**18.04.2007 Bulletin 2007/16**

(73) Proprietor: **3M Innovative Properties Company**
**St. Paul MN 55133-3427 (US)**

(72) Inventors:
- **SEBASTIAN, John M.**
  **Saint Paul, MN 55133-3427 (US)**
- **GRYSKA, Stefan H.**
  **Saint Paul, MN 55133-3427 (US)**
- **KLUN, Thomas P.**
  **Saint Paul, MN 55133-3427 (US)**
- **JARIWALA, Chetan P.**
  **Saint Paul, Minnesota 55133-3427 (US)**

(74) Representative: **Wilhelm, Stefan et al**
**3M Deutschland GmbH**
**Office of Intellectual**
**Property Counsel**
**Carl-Schurz-Strasse 1**
**41453 Neuss (DE)**

(56) References cited:
**US-A- 6 132 844**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 773 960 B1

## Description

### FIELD OF THE INVENTION

The present invention relates to a repellent article comprising a layer of a thermoplastic polymer, and an adhesive layer having a fluorochemical repellent additive dispersed therein. The present invention also relates to a method of making such articles. The repellent article is useful, for example, in medical or surgical drapes, garments, protective films and barriers, carpet backings and outdoor fabrics and films.

### BACKGROUND OF THE INVENTION

It is known in the art to modify the surface properties of a thermoplastic polymer by adding a compound during the extrusion of the thermoplastic polymer. For example, WO 92/18569 and WO 95/01396 describe fluorochemical additives for use in the extrusion of thermoplastic polymers to prepare films and fibers with repellency properties. However, many fluorochemicals cannot be directly compounded and extruded as a melt because of the low decomposition temperatures of the fluorochemical repellent additives. In other cases, the fluorochemical repellent additives may interfere with polymer nucleation, or may degrade the physical properties of the thermoplastic polymer during processing. US 6,132,844 discloses adhesive backed articles comprising an adhesive layer which optionally includes a fluor alkyl siloxane.

It is further known to provide coatings of various fluorochemicals on polymer films to provide repellency properties. Such coatings add an additional, and often costly manufacturing step, and the resulting coatings are subject to wear and environmental degradation.

### SUMMARY

Accordingly, there is a need for a thermoplastic polymer articles with a repellent surface. There is a further need to provide such repellent surfaces that will avoid problems associated with compounding in the melt, and coating degradation. As will be set forth in detail below, the present invention solves this problem by dispersing a fluorochemical repellent additive in an adhesive layer bonded to the thermoplastic polymer layer of the article. The thermoplastic polymer layer may be in the form of a nonporous film, a membrane or a fibrous layer, such as a woven or nonwoven fabric.

The present invention solves a problem of the art by providing a reservoir for fluorochemical repellent additives in an adhesive layer bonded, adhered, or otherwise affixed to a thermoplastic polymer layer, in order that the surface (s) of the polymer layer is rendered repellent via migration of such fluorochemical repellent additives from the adhesive into the polymer layer, and that the additive lost by degradation may be renewed.

According to the invention the fluorochemical repellent additive has a diffusion constant in the thermoplastic polymer layer of greater than $0.1 \times 10^{-10}$ $cm^2/s$ at 25°C.

Representative fluorochemical repellent additives useful in the present invention include fluorochemical urethanes, ureas, esters, amides, carbodiimides, guanidines, oxazolidinones, isocyanurates, piperazines, oxazolidinones, biurets and fluorochemical radical-containing oligomers. Representative fluorochemical radical-containing oligomers include fluorochemical acrylate and substituted acrylate homopolymers and copolymers containing fluorochemical acrylate monomers optionally interpolymerized with fluorine-free monomers such as methyl methacrylate, butyl acrylate, and octadecylmethacrylate. Blends of these materials are also considered useful. In many embodiments, the article may further comprise a non-fluorochemical surfactant dispersed in the adhesive layer.

The present invention provides a repellent article comprising a polymeric layer having a first repellent surface and a second surface having an adhesive layer bonded thereto, said adhesive layer comprising sufficient fluorochemical repellent additive dispersed therein which migrates to said first surface of said polymeric layer, rendering it repellent to oil and/or water the fluorochemical repellent additive is used in an amount sufficient to provide the desired level of repellency to the thermoplastic polymer layer (upon migration). Typically, the fluorochemical repellent additive will be added in an amount sufficient to provide the thermoplastic polymer layer with an advancing water contact angle of 85° or greater and/or an advancing oil contact angle of 50° or greater.

While a range of fluorochemical repellent additive concentrations may be used in the practice of the invention, generally the adhesive layer will contain at least 1 wt.% up to and including 45 wt.% of at least one fluorochemical repellent additive fluorochemical repellent additive, based on the total weight of the adhesive layer. Preferably the pressure sensitive adhesive layer comprises from at least 3 to 15 wt.% of repellent additive, based on the total weight of the adhesive layer.

In another aspect, the present invention provides a method of making a repellent article comprising contacting a pressure sensitive adhesive with a major surface of a first thermoplastic polymer layer, wherein the adhesive comprises from 1 weight percent up to and including 45 weight percent of at least one fluorochemical repellent additive based on

the total weight of the adhesive.

It will be understood that in connection with the present invention the use of the term "dispersed therein" denotes merely the initial presence of the fluorochemical repellent additive in the adhesive layer without limitation as to where the fluorochemical repellent additive may subsequently migrate. Thus the fluorochemical repellent additive may be initially uniformly dispersed in the bulk of the adhesive or may have migrated to the surface of the thermoplastic polymer layer.

As used herein, "repellent" or "repellency" is used only to refer to the surface characteristics of the thermoplastic polymer layer, i.e., that it is a measure of a substrate's resistance to wetting by oil and/or water and or adhesion of particulate soil. Repellency may be measured by the test methods described herein. Accordingly, a thermoplastic polymer layer may be referred to as repellent whether or not the layer is impermeable or permeable to aqueous solutions.

One aspect of the present invention is a method for providing a repellent article comprising a thermoplastic polymer layer and an adhesive layer, comprising the steps of: (a) dispersing into an adhesive layer at least one fluorochemical repellent additive that provides a repellent surface to the polymer layer (upon migration of the additive); and (b) adhering the adhesive to a thermoplastic polymer layer such that the adhesive layer provides a fluorochemical repellent additive reservoir for the polymer layer. A feature of the present invention is the ability to provide a reservoir of fluorochemical repellent additive in an adhesive contacting the polymer layer to provide repellency over a period of time.

Unexpectedly, the method of the present invention not only provides a repellent surface to a polymer layer adjoining the adhesive, but also, when the reservoir adhesive adjoins a first layer, other layers in a composite article. More specifically, if the reservoir adhesive adjoins a first layer, the fluorochemical repellent additives migrate through the first layer into additional layers in a multilayer article. Significantly, the fluorochemical repellent additives in a reservoir may migrate across two different layers of two different materials to render a third layer repellent. Thus, another advantage of the present invention is the ability to use multilayer films that might not contain any fluorochemical repellent additives yet are provided a repellent surface via fluorochemical repellent additives that have migrated from an adhesive layer, through intermediate layers.

Another aspect of the present invention is a thermoplastic polymer layer that is rendered repellent by an adjoining adhesive delivery system for fluorochemical repellent additives that provides a repellent surface to the adjoining thermoplastic polymer layer, and wherein the thermoplastic polymer layer itself initially has some degree of oleo- or hydrophobicity, prior to fluorochemical repellent additive migration. In another aspect, the adhesive delivery system enhances the repellency of a thermoplastic polymer layer.

"Adhesive delivery system" means the use of adhesive to provide a reservoir for fluorochemical repellent additives and to facilitate the migration of such fluorochemical repellent additives from the adhesive layer into adjoining thermoplastic polymer layer(s). Use of this adhesive delivery system eliminates problems that occur in the two most common methods used for providing a repellent surface to thermoplastic polymers: extrusion and coating. Fluorochemical repellent additives frequently cannot be directly compounded and extruded as a melt because of the low decomposition temperatures of the fluorochemical repellent additives. In other cases, the fluorochemical repellent additives may interfere with polymer nucleation, or may degrade the physical properties of the thermoplastic polymer during processing.

Coating methods to provide a repellent surface also have some limitations. First of all, the extra step required in film preparation is expensive, time consuming and involves safety and environmental issues. Many of the solvents used for coating are flammable liquids or have exposure limits that require special production facilities. Furthermore the quantity of fluorochemical repellent additive is limited by the solubility in the coating solvent and the thickness of the coating. Again, incorporation of fluorochemical repellent additives into the adhesive can solve these problems. The "adhesive delivery system" of the present invention solves these problems.

Unless otherwise stated, the following terms used in the specification and claims have the meanings given below:

"Alkyl" means a linear or branched saturated monovalent hydrocarbon radical having from one to about twelve carbon atoms or a branched saturated monovalent hydrocarbon radical, e.g., methyl, ethyl, 1-propyl, 2-propyl, pentyl, and the like.

"alkylene" means a linear saturated divalent hydrocarbon radical having from one to about twelve carbon atoms or a branched saturated divalent hydrocarbon radical, e.g., methylene, ethylene, propylene, 2-methylpropylene, pentylene, hexylene, and the like.

"Aliphatic" means a linear or branched saturated mono- or polyvalent hydrocarbon radical.

"Isocyanate-reactive functional group" means a functional group that is capable of reacting with an isocyanate group, such as hydroxyl, amino, thiol, etc.

"Perfluorinated group" means an organic group wherein all or essentially all of the carbon bonded hydrogen atoms are replaced with fluorine atoms, e.g. perfluoroalkyl, and the like.

"Polyisocyanate" means a compound containing an average of greater than one, preferably two or more isocyanate groups, -NCO, attached to a multivalent organic group, e.g. hexamethylene diisocyanate, the biuret and isocyanurate of hexamethylene diisocyanate, and the like.

"Polyol" means an organic compound or polymer with an average of greater than one, preferably two or more primary or secondary hydroxyl groups per molecule, e.g. ethylene glycol, propylene glycol, 1,6-hexanediol, and the like.
"Polyfunctional compound" means a compound containing an average of greater than one, preferably two or more having nucleophilic or electrophilic reactive functional groups attached to a multivalent organic group, including, for example, polyisocyanates, polyols, polyesters, polyamines and the like.
"Perfluoroalkyl" means all or essentially all of the hydrogen atoms of the alkyl radical are replaced by fluorine atoms.
"Repellency" is a measure of a treated substrate's resistance to wetting by oil and/or water and or adhesion of particulate soil. Repellency may be measured by the test methods described herein.

## BRIEF DESCRIPTION OF THE DRAWING

The drawing is an exemplary cross-sectional side view of a repellent article according to the present invention.

## DETAILED DESCRIPTION

Referring now to the Figure, exemplary repellent article 100 comprises thermoplastic polymer layer 110 having major surfaces 120 and 125. Pressure sensitive adhesive layer 130 contacts major surface 120, and optionally contacts major surface 150 of substrate 140. Pressure sensitive adhesive layer 130 comprises at least one pressure sensitive adhesive and at least 1 weight percent, on a total weight basis of the pressure sensitive adhesive layer, of at least one fluorochemical repellent additive. In some embodiments of the present invention, substrate 140 may be, for example, a release liner.

Without wishing to be bound by theory, it is believed that fluorochemical repellent additive in the adhesive layer gradually migrates from the pressure sensitive adhesive layer into the thermoplastic polymer layer. During use, exposure or storage, fluorochemical repellent additive that has diffused to the thermoplastic polymer layer may be depleted. By providing a gradual release of fluorochemical repellent additive from the adhesive reservoir, the thermoplastic polymer layer may be provided with a continuous supply of fluorochemical repellent additive. It is believed that the migration of the fluorochemical repellent additive from the adhesive layer through the thermoplastic polymer layer is a diffusion process, and therefore the $T_g$ of the adhesive layer and thermoplastic polymer layers are preferably at or below 25°C, and is more preferably below about 0°C. Polymers in the glassy state are generally less permeable than those in the rubbery state, so polymers in the rubbery state are particularly useful. Heating the article may enhance the migration of the fluorochemical repellent additive.

If it is assumed that Fick's Second Law applies, such that there is an effective diffusion coefficient (D) that is not concentration dependent, then for 1 dimensional diffusion of a species into a semi-infinite medium, the solution of

$$\partial C/\partial t = D(\partial^2 C/\partial x^2) \quad \text{[Fick's 2}^{\text{nd}}\text{ law]}$$

where $C = C_0$, $x = 0$, $t > 0$ [boundary condition]
and $C = 0$, $x > 0$, $t = 0$ [initial condition]
is found to be

$$C = C_0(\mathrm{ERFC}[x/(4Dt)^{1/2}]),$$

where C is the concentration of the diffusing species, t is time, x is the coordinate of the diffusion direction, and ERFC is the complementary error function. Reference may be made to The Mathematics of Diffusion, 2 nd Edition, J. Crank, Clarendon Press, Oxford, 1975.

The Fick's diffusion constant of the additive, D (which is dependent on the fluorochemical repellent additive, the polymer and temperature) is greater than 0.1 $x10^{-10}$ $cm^2/s$, preferentially greater than $10x10^{-10}$ $cm^2/s$ and most preferentially greater than 100 $x10^{-10}$ $cm^2/s$ at 25°C in the thermoplastic polymer layer. It is expected that articles having diffusion constants in this range would experience rates of diffusion such that the concentration of the fluorochemical repellent additive reaches a level about equal to half of its initial value in the adhesive (i.e. $C = C_o/2$ from above) within a few days. For liquid fluorochemical repellent additives, it may be preferred for the concentration to be above the solubility limit in the adhesive. Above this limit the diffusion will be enhanced.

The fluorochemical repellent additives are nonionic, hydrophobic and oleophobic. Useful additives comprise a fluoroaliphatic moiety and an oleophilic moiety, and will phase separate in the adhesive layer upon cooling, or at room

temperature, in the absence or solvent or other surfactants. Useful additives further have an advancing water contact angle of 85° or greater and an advancing oil (hexadecane) contact angle of 50° or greater. Advancing contacts angles may be measured using, for example, a CAHN Dynamic Contact Angle Analyzer, Model DCA 322, by the test methods described herein. Further, the fluorochemical repellent additives have a molecular weight ($M_w$) of less than 50,000, preferably less than 10,000, and most preferably less than 5,000.

One useful class of fluorochemical repellent additives are those esters, amides, urethanes and ureas depicted generally by the formulas presented below:

$$[R_f\text{-}Q^1]_p\text{-}R^1\text{-}[Q^2\text{-}R_h]_q \qquad (I)$$

wherein:

$R_f$ is a stable, inert, non-polar, preferably saturated, monovalent moiety which is both oleophobic and hydrophobic. $R_f$ preferably contains at least about 3 carbon atoms, more preferably 3 to about 20 carbon atoms, and most preferably about 3 to about 14 carbon atoms. $R_f$ can contain straight chain, branched chain, or cyclic fluorinated alkylene groups or combinations thereof or combinations thereof with straight chain, branched chain, or cyclic alkylene groups. $R_f$ is preferably free of polymerizable olefinic unsaturation and can optionally contain catenary heteroatoms such as divalent oxygen, or trivalent nitrogen. It is preferred that $R_f$ contain about 40% to about 78% fluorine by weight, more preferably about 50% to about 78% fluorine by weight. The terminal portion of the $R_f$ group contains a fully fluorinated terminal group. This terminal group preferably contains at least 7 fluorine atoms, e.g., $CF_3CF_2CF_2$-, $(CF_3)_2CF$-, or the like. Perfluoroalkyl groups (i.e., those of the formula $C_oF_{2o+1}$, where o is 3 to 14 are preferred embodiments of $R_f$);

$R^1$ is the residue of a mono- or polyfunctional compound, representing an aliphatic or aromatic moiety containing from 1 to 60, preferably 12 to 50 carbon atoms, for example a monoalcohol or polyol, mono- or polyamine, mono- or polyacid, or mono- or polyester, or mono- or polyisocyanate;

$R_h$ is an oleophilic organic group having from 1 to 100, preferably 12 to 60 carbon atoms, that may be cyclic or acyclic, linear or branched, aliphatic or aromatic (or any combination thereof);

$Q^1$ and $Q^2$ are each divalent linking groups such as an be an organic moiety containing from 1 to about 20 atoms and that optionally can contain oxygen-, nitrogen- or sulfur-containing groups or any combination thereof, and is preferably free from active hydrogen atoms; preferably, $Q^1$ and $Q^2$ are each independently $-(CH_2)_k-O-C(O)-$, $-(CH_2)_k-NR^2-C(O)-$, $-(CH_2)_k-C(O)-O-$, $-(CH_2)_k-C(O)_NR^2-$, $-SO_2\ N(R^2)(CH_2)_k-$, $-(CH_2)_k-$, $-CON(R^2)(CH_2)_k$ -, $-(CH_2)_kSO_2N(R^2)(CH_2)_k-$, $-(CH_2)_k-O-C(O)NR^2-$, or $-(CH_2)_k-NR^2-C(O)-NR^2-$,where $R^2$ is hydrogen, a phenyl group or is a short chain substituted or unsubstituted alkyl group, preferably a methyl or ethyl group and where each k is independently an integer from 1 to about 20;

p is at least 1, preferably at least 2;

q may be zero, and preferably is at least 1; and

p+q is equal to the valency of $R^1$.

Compounds of Formula I can be generally prepared by reacting a mono- or polyfunctional compound having nucleophilic or electrophilic reactive functional groups, with a co-reactive fluorochemical monofunctional compound having complementary reactive functional group. By complementary is meant that if the reactive functional groups of the mono- or polyfunctional compound are electrophilic in nature, the second component should possess co-reactive nucleophilic groups. The converse is also useful; when the polyfunctional compound contains reactive nucleophilic groups then the second component contains co-reactive electrophilic groups. In a similar manner, the mono- or polyfunctional compound may be reacted with a compound having an oleophilic group ($R_h$) and a reactive functional group that is complementary with that of the polyfunctional compound.

The $R_f$ group of Formula I may be introduced by reaction of a polyfunctional compound (for example a polyol or polyisocyanate) with a fluorochemical monofunctional compound $R_f$- $Q^{1'}$, wherein $R_f$ is as defined for formula I, and $Q^{1'}$ is a moiety comprising a functional group that is reactive toward the functional group of the polyfunctional compound. For example, $Q^{1'}$will comprise an isocyanate-reactive functional group. It will be understood with reference to Formula I that the compound $R_fQ^{1,}$ reacts with the polyfunctional compounds to provide the terminal moiety $R_fQ^1$-, by reaction between complementary functional groups.

Examples of useful reactive functional groups $Q^{1'}$ may comprise hydroxyl, amino, oxazolinyl, oxazolonyl, acetyl, acetonyl, carboxyl, isocyanato, epoxy, aziridinyl, ester and acyl halide groups. Where the functional group of $R^1$ is an isocyanato functional group (from a polyisocyanate polyfunctional compound), the co-reactive functional group preferably comprises a secondary amino, carboxyl, or hydroxyl group. Where pendent reactive functional group of $R^1$ comprises a hydroxyl group (from a polyol polyfunctional compound), the co-reactive functional group preferably comprises a carboxyl, isocyanato, epoxy, anhydride, or oxazolinyl group. Preferred functional groups on $Q^{1'}$ are hydroxyl groups and

carboxylic acid derivatives such as esters or acid halides.

$R_f$- $Q^{1'}$ may be selected from fluorochemical monoalcohols. Representative fluorine-containing monoalcohols include 2-(N-ethylperfluorobutanesulfonamido)ethanol; 2-(N-ethylperfluorobutanesulfonamido)ethanol; 2-(N-methylperfluorobutanesulfonamido)propanol; N-methyl-N-(4-hydroxybutyl)perfluorohexanesulfonamide; 1,1,2,2- tetrahydroperfluorooctanol; 1,1-dihydroperfluorooctanol; and the like; and mixtures thereof.

$R_f$- $Q^{1'}$ may be selected from fluorochemical carboxylic acid (or derivatives thereof, such as esters or acid halides). Representative examples of useful derivatives of fluorine-containing monocarboxylic acids include perfluorobutanoic ($C_3F_7COOH$), perfluoroisobutanoic ($(CF_3)_2CFCOOH$), hydroperfluorobutanoic ($C_3F_6HCOOH$), perfluoropentanoic ($C_4F_9COOH$), hydroperfluoropentanoic ($C_4F_8HCOOH$), perfluorohexanoic ($C_5F_{11}COOH$), hydroperfluorohexanoic ($C_5F_{10}HCOOH$), perfluorocyclohexanyl carboxylic ($C_6F_{11}COOH$), perfluoroheptanoic ($C_6F_{13}COOH$), 2-(N-(ethyl)perfluorobutanesulfonamido)acetic, and 2-(N-(methyl)perfluorobutanesulfonamido)acetic, and the like, and mixtures and derivatives thereof.

It will be understood, with respect to the above lists, that the terminal hydroxyl or carboxyl groups (of $Q^{1'}$) may be replaced with other functional groups (amines, thiols, etc) that are reactive with the function groups of the polyfunctional compound to form the linking group $Q^1$ of Formula I.

Similarly, the moiety $R_h$ is introduced by reaction of the polyfunctional compound (for example a polyol or polyisocyanate) with a fluorochemical monofunctional compound $R_h$- $Q^{2'}$, where $R_h$ is as defined for formula I and $Q^{2'}$ is a moiety comprising a functional group that is reactive toward the functional group of the polyfunctional compound, as previously described with respect to $Q^{1'}$.

With reference to Formula I, relatively simple esters, amides, ureas and urethanes are defined when q is zero. Here, for example, an ester of a fluorinated acid may be prepared by reacting a fluorinated acyl halide with an alcohol. An amide may be prepared by reacting fluorinated acyl halide with an amine. A "reverse ester" may be prepared by fluoride ion catalyzed addition of a perfluorinated acyl fluoride (yielding the transient perfluorinated alkoxide intermediate) to an acid halide or ester. Alternatively, esters such as $C_4F_9C_2H_2OC(O)C_8H_{17}$ may be prepared by simple esterification.

Again with reference to Formula I, polyureas and polyurethanes may be prepared when $R^1$ represents the residue of a polyisocyanate. By way of example, if the polyfunctional compound is a polyisocyanate, this may be reacted with a fluorochemical monoalcohol compound, the reaction yielding a urethane link. Further, the oleophilic group, $R_h$ may be introduced by further reaction of the polyisocyanate with, for example, an aliphatic alcohol. The corresponding polyurea may be produced by reaction of a polyisocyanate with a fluorochemical monoamine and an alkylamine. Compounds having "reverse" linkages may be prepared, for example, by providing a polyol, and reacting it with a fluoroalkyl isocyanate, and subsequent reaction with a nonfluorinated isocyanate, such as and aliphatic or aromatic monoisocyanate.

$R^1$ may further represent the residue of a polyamine, which may be reacted with a fluorochemical monoacid (or equivalent thereof such as an acid halide) to introduce the $R_f$ group, and subsequent reaction with a nonfluorinated acid to introduce the $R_h$ group to produce an amide.

Fluorochemical esters, amides, ureas and urethanes may also be prepared by the methods described in U.S. Patent Nos. 6,127,485 (Klun et al.), 5,459,188 (Sargent et al), 5,577,390 (Raiford et al.), 5,898,046 (Raiford et al.), 6,297,304 (Raiford et al.), and U.S. published application 2003-0136938-A1.

Another useful class of fluorochemical repellent additives are fluorochemical oxazolidinones, in which a monovalent fluoroaliphatic radical, $R_f$, is bonded to the 5-position carbon atom of an oxazolidinone ring by an organic linking group. Such fluorochemical oxazolidinones are the general formula:

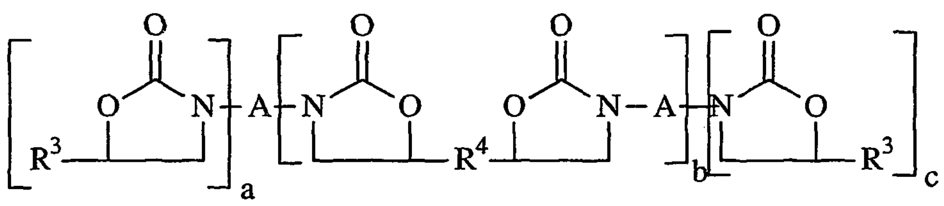

(II)

where each $R^3$ is independently hydrogen or an organic radical, which organic radical can contain -$Q^3$-$R_f$ where $Q^3$ is a linking group and $R_f$ is a fluoroaliphatic radical, as defined previously for Formula I. Each $R^2$ is independently an organic radical, which organic radicals can contain -$Q^3$-$R_f$ where $Q^3$ and $R_f$ are as defined above, with the proviso that there is at least one $R_f$ radical in one of $R^3$ and $R^4$, each A is independently an organic radical, a is zero or 1, b is a number from 0 to about 6, c is 0, 1 or 2, and the sum of a+b+c is at least 1.

In Formula II, each $R^3$ is independently H or an organic radical and can be selected from alkyl, cycloalkyl, aryl and combinations thereof, e.g., aralkyl, and can contain halogen atoms, fluoroaliphatic radicals, $R_f$, and one or more hetero atoms or hetero atom-containing moieties, e.g. -O-, -S-, -SO-, -$SO_2$-, -CO-, and

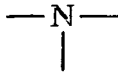

(hereinafter trivalent nitrogen) and is preferably free from active hydrogen atoms (i.e., hydrogen atoms of groups such as hydroxyl, amino, mercapto and carboxyl that can readily react with isocyanate under urethane bond-forming conditions, e.g. 20°-100° C.). Suitable $R^3$ groups have up to 20 carbon atoms and include, for example, H-, $ClCH_2$-, $C_6H_5$-, $C_6H_5OCH_2$-, $C_8F_{17}SO_2N(CH_3)CH_2$-,$C_6F_{13}CH_2CH_2OCH_2$-, and $C_{10}F_{21}CH_2CH_2SCH_2OCH_2$-.

In Formula II, $R^4$ is a divalent organic linking group which can be selected from alkylene groups such as ethylene, propylene, hexylene, and methylene dicyclohexylene, having 2 to about 20 carbon atoms, aralkylene groups, such as $-CH_2C_6H_4CH_2$- and - $C_6H_4CH_2C_6H_4$-, having up to 20 carbon atoms, arylene groups, such as tolylene and various combinations of these groups. The $R^2$ groups can also contain $R_f$ radicals and one or more hetero atoms or hetero atom-containing moieties, e.g., -O-, -S-, -SO-, $-SO_2$-, trivalent nitrogen and -CO-, and are preferably free of active hydrogen atoms. Suitable $R^4$ groups include, for example, $-CH_2\,O(CH_2)_4OCH_2$-, $-CH_2OCOC_6H_4COOCH_2$-, $-CH_2OC_6H_4(CH_3)_2C_6H_4OCH_2$-, $C_8F_{17}SO_2N(CH_2-)_2$, $C_6F_{13}CON(CH_2-)_2$.

The organic linking group A in Formula I is a mono-, di- or polyvalent organic radical, such as alkyl (e.g. butyl, hexyl), aryl (e.g. phenyl), aralkyl (e.g. tolyl); alkylene (e.g. ethylene, hexamethylene), arylene (e.g. tolylene) or aralkylene (e.g., - $CH_2C_6H_4CH_2$- and $-C_6H_4CH_2C_6H_4$-). The organic linking groups can have up to 20 carbon atoms and can contain one or more of the hetero atoms or hetero atom-containing moieties, e.g., -O-, -S-, -SO-, $-SO_2$-, trivalent nitrogen and -CO-, and are preferably free of said active hydrogen atoms.

The A group can be the residue of an organic isocyanate from which the oxazolidinone moieties are formed. That is, A is the residue of an organic isocyanate exclusive of the isocyanate functional group. Isocyanates useful in preparing the oxazolidinones of this invention include, for example, monoisocyanates such as phenyl or tolylisocyanate, diisocyanates such as hexamethylene diisocyanate, tolylene diisocyanate, isophorone diisocyanate, xylylene diisocyanate, methylenebis(4-phenyleneisocyanate), and polyarylpolyisocyanates such as dimethylenetriphenylene triisocyanate. Other isocyanates, which can be used in preparing the oxazolidinones, include carbamate or urylene group-containing adducts of diisocyanates and diols or polyols. Suitable A groups include, for example, $C_6H_5$-, $CH_3C_6H_4$-, $-C_6H_3(CH_3)$-, $-CH_2C_6H_4CH_2$-,$-C_6H_4CH_2C_6H_4$-, $-(CH_2)_6$-, $-(CH_2)_6N[CONH(CH_2)_6]_2$, $C_8F_{17}SO_3C_6H_4$-,$-C_6H_{10}CH_2C_6H_{10}$-, and $C_8F_{17}SO_2N[C_2H_4OCONHC_6H_3(CH_3)-]_2$.

In each of the above fluorochemical oxazolidones of general Formula I where there are a plurality of $R^3$, $R^4$ and A groups or moieties, each can be the same or different. Also Formula II represents individual compounds or mixtures of compounds, for example, as they are obtained as products from reactions used in their preparation. In addition, small amounts of by-products, with and without the fluoroaliphatic radical $R_f$, and not represented by Formula I, can also be present in small amounts in said mixtures or reaction products because of the reaction conditions involved in their preparation. The presence of such small amounts of by-products, generally less than 10 weight percent, does not affect the usefulness of the fluorochemical oxazolidinone mixtures or compounds of this invention.

When the $R^3$ or $R^4$ groups contain a fluoroaliphatic group, $R_f$, the fluoroaliphatic radical is bonded to the 5-position carbon atom of the oxazolidinone moiety by linking group, $Q^3$. Each $Q^3$ can comprise a hetero atom-containing group, e.g., a group containing -S-, -O-, and/or trivalent nitrogen or an organic group or a combination of such groups, examples of which are polyvalent aliphatic, i.e., $-CH_2$-, $-CH_2CH_2$-, and $-CH_2CH(CH_2-)_2$, $-SO_2N(CH_2-)_2$, polyvalent aromatic, oxy, thio, carbonyl, sulfone, sulfoxy, $-N(CH_3)$-, sulfonamido, carbonamido, sulfonamidoalkylene, e.g., $-SO_2NR^5(CH_2)_3$-, where e is 1 to 6 and $R^5$ is lower alkyl having 1 to 4 carbon atoms, carbonamidoalkylene, carbonyloxy, urethane, e.g., $--CH_2\,CH_2\,OCONH--$, and urylene, e.g., -NHCONH-. The linkage $Q^3$ for a specific fluorochemical oxazolidinone will be dictated by the ease of preparation of such a compound and the availability of necessary precursors thereof. However, the $Q^3$ group is preferably free of said active hydrogen atoms.

Compounds of Formula II may be prepared by the methods described in U.S. patents 5,025,052 and 5,099,026 (Crater et al.)

Another useful class of fluorochemical repellent additives are fluorochemical piperazine compounds which comprise a fluoroaliphatic moiety and a piperazine ring. A class of said piperazine compounds are those that further comprise an organic moiety, and where one of the nitrogen atoms of said piperazine ring is bonded to said fluoroaliphatic moiety through a linking group, and the other nitrogen atom of said piperazine ring is bonded to said organic moiety and can be represented by Formula III

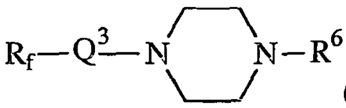

(III)

In Formula III, $R_f$ is as defined in Formula I and $Q^3$ is as defined in Formula II.

$R^6$ is an aliphatic group that can contain from 2 to 35 carbon atoms, $R^6$ preferably contains from 4 to 35 carbon atoms. Particularly preferred $R^6$ groups comprise a polar group, e.g., hydroxy or carbonyl, located proximal to the piperazine ring, and a non-polar hydrocarbon moiety located distal to the piperazine ring. Said hydrocarbon moiety can be aryl, alkyl, or combinations thereof and can include unsaturation and hetero atoms. Suitable $R^6$ groups include, for example, $-C_{18}H_{37}$, $-CH_2CH(OH)C_{16}H_{33}$, $-C_{14}H_{29}$, $-C_6H_5$, $-C_6H_4CH_3$, $-C_6H_4CH_2CH_3$, $-C_6H_3(CH_3)_2$, $-C_6H_2(CH_3)_3$,$-C_{10}H_9$ (naphthyl), $-[CH(CH_3)CH_2]_nH$, $-[CH_2CH(CH_3)]_nH$, $-[CH(C_2H_5)CH_2]_nH$, $-C(O)N(H)C_{18}H_{37}$, $- C(O)C_{16}H_{33}$.

The fluoroaliphatic radical-containing piperazine compounds can be prepared using known organic reactions, such as those disclosed in the Katritzky et al., "Design and Synthesis of Novel Fluorinated Surfactants for Hydrocarbon Subphases," Langmuir, vol. 4, (No. 3), pp. 732-735 (1988) and in U.S. 5.451,622 (Boardman et al.).

Another useful class of fluorochemical repellent additives are fluorochemical oligomers comprising:

(i) an oligomeric portion having fluoroaliphatic and optionally fluorine-free aliphatic pendent groups;
(ii) an aliphatic moiety; and
(iii) a linking group which links the oligomeric portion to the aliphatic moiety; wherein the ratio of fluoroaliphatic pendent groups to fluorine-free aliphatic pendent groups (if present) is greater than or equal to 4. Such fluorochemical oligomeric compounds maybe represented by the formulas IV or IV:

$$[(A^2)_m\text{-}L]_nR^7 \qquad \text{IV}$$

$$(A^2)_m[L\text{-}R^7]_n \qquad \text{V}$$

wherein
m is 1 or 2;
n is 1 to 4 inclusive;
each L independently comprises a linking group;
each $R^7$ is a saturated or unsaturated aliphatic moiety; and
each $A^2$ is a fluorochemical oligomeric portion of Formula VI:

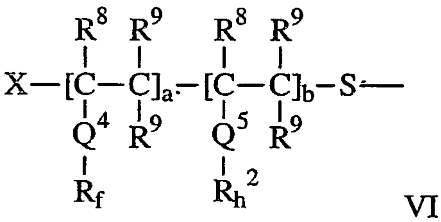

VI

wherein a is at least 4, the sum of a + b is a number such that $A^2$ is oligomeric and comprises a plurality of pendent $R_f$ and $R_h^2$ groups in ratios (a:b) of ≥ 4;
$R^8$ is hydrogen, halogen, or straight chain or branched chain alkyl containing 1 to about 4 carbon atoms;
each $R^9$ is independently hydrogen or straight chain or branched chain alkyl containing 1 to about 4 carbon atoms;
$Q^4$ and $Q^5$ are each independently a covalent bond or an organic linking group,
$R_f$ is a fluoroaliphatic group, such as $-(CF_2)_7CF_3$, that comprises a fully fluorinated terminal group;
$R_h^2$ is a fluorine-free aliphatic group; and
X is a hydrogen atom or a group derived from a free radical initiator (e.g. t-butoxy.

Preferably, with reference to Formulas III and IV, both m and n are one to produce a fluorinated compound of Formula VII:

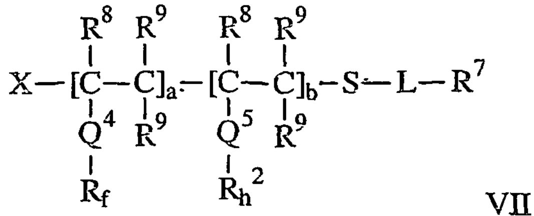

VII

With reference to Formulas VI and VII, it will be understood that the oligomer may have a random distribution of fluorinated and fluorine-free segments, or a sequential arrangement where the oligomer comprises "blocks" of fluorinated and optionally fluorine-free segments. Further it will be understood that the relative position of the units derived from fluorinated monomers and fluorine-free monomers may vary with respect to the X and S moieties.

As described above and further illustrated in Formulas IV to VII, a fluorochemical composition of the invention comprises a fluorinated compound that generally has three principal portions: a fluorochemical oligomeric portion "$A^2$" having pendent fluorinated and optionally fluorine-free portions, a non-polymeric linking group "L", and an aliphatic moiety "$R^7$". The oligomeric portion and the organic moiety are linked together by linking group L. The linking group may be a covalent bond, may result from a condensation reaction between a nucleophile, such as an alcohol, an amine, or a thiol, and an electrophile such as a carboxylic acid, ester, acyl halide, sulfonate ester, sulfonyl halide, cyanate, isocyanate, or may result from a nucleophilic displacement reaction between a nucleophile, such as previously described, and a moiety bearing a leaving group, such as the reaction between an alcohol (or alkoxide) and an alkyl halide (where the halogen atom of the alkyl halide serves as a leaving group).

Examples of suitable linking groups L include a covalent bond, straight chain, branched chain, or cyclic alkylene, arylene, aralkylene, oxy, oxo, hydroxy, thio, sulfonyl, sulfoxy, amino, imino, sulfonamido, carboxamido, carbonyloxy, urethanylene, urylene, and combinations thereof such as sulfonamidoalkylene.

Each $R_f$ is a stable, inert, non-polar, preferably saturated, monovalent moiety which is both oleophobic and hydrophobic. $R_f$ preferably contains at least about 3 carbon atoms, more preferably 3 to about 20 carbon atoms, and most preferably about 3 to about 14 carbon atoms. $R_f$ can contain straight chain, branched chain, or cyclic fluorinated alkylene groups or combinations thereof or combinations thereof with straight chain, branched chain, or cyclic alkylene groups. $R_f$ is preferably free of polymerizable olefinic unsaturation and can optionally contain catenary heteroatoms such as divalent oxygen, or trivalent nitrogen. It is preferred that $R_f$ contain about 40% to about 78% fluorine by weight, more preferably about 50% to about 78% fluorine by weight. The terminal portion of the $R_f$ group contains a fully fluorinated terminal group. This terminal group preferably contains at least 7 fluorine atoms, e.g., $CF_3CF_2CF_2$-, $(CF_3)_2CF$-, or the like. Perfluorinated aliphatic groups (i.e., those of the formula $C_oF_{2o+1}$, where o is 4 to 14 are the most preferred embodiments of $R_f$).

The fluorine-free aliphatic moiety, designated $R_h^2$ in compounds of Formulas IV to VII is a monovalent, linear or branched chain, saturated or unsaturated, cyclic or acyclic (or any combination thereof) fluorine-free aliphatic group having from 1 to 75 carbon atoms. Although not preferred, $R_h^2$ may contain aromatic rings. $R_h^2$ may contain caternary oxygen atoms. The range of structures contemplated for the organic moiety $R_h^2$ will be better understood with reference to the compounds suitable for use in steps of the Reaction Schemes described in detail below. Preferably $R_h^2$ is a linear, monovalent alkyl group group of the structure $-C_nH_{2n+1}$, where n is 1 to 75, preferably 12 to 75, and most preferably 18 to 60. Where more than one $R_h^2$ group is present, such as in Formula II, or when n is greater than one in Formula I, the sum of the carbon atoms in the $R_h^2$ groups is preferably 100 carbon atoms or fewer.

The organic aliphatic moiety, designated $R^7$ in compounds of Formulas IV to VII is a mono-, di-, tri- or tetravalent, linear or branched chain, saturated or unsaturated, cyclic or acyclic (or any combination thereof) organic aliphatic group having from 1 to 75 carbon atoms. $R^7$ may contain caternary oxygen atoms. Although not preferred, $R^7$ may contain aromatic rings and may be fluorinated (i.e $R^7 = R_f$). The valency is equivalent to the value of n in Formula IV and is equal to 1 in Formula V. The range of structures contemplated for the organic moiety R will be better understood with reference to the compounds suitable for use in steps of the Reaction Schemes described in detail below. Preferably $R^7$ is a linear, monovalent alkyl group of the structure $-C_nH_{2n+1}$, where n is 1 to 75, preferably 12 to 75, and most preferably 18 to 60. Where more than one $R^7$ group is present, such as in Formula II, or when n is greater than one in Formula I, the sum of the carbon atoms in the $R^7$groups is preferably 100 carbon atoms or fewer.

The aliphatic backbone of the fluorochemical oligomeric portion comprises a sufficient number of polymerized units to render the portion oligomeric. The aliphatic backbone preferably comprises from 5 to about 10 polymerized units ("a" and "b" in Formula VII) derived from fluorinated and fluorine-free monomers (i.e., monomers containing a fluorinated aliphatic group $R_f$ and a fluorine-free aliphatic group $R_h$ as defined above), it is more preferred that the aliphatic backbone comprise from 5 to about 8, most preferably about 5, polymerized units.

The fluorochemical compositions of the invention generally comprise mixtures of alkylated fluorochemical oligomeric compounds. Accordingly, compounds are sometimes referred to herein as having non-integral numbers of particular substituents (e.g., "a=4.7"). In such cases the number indicates an average and is not intended to denote fractional incorporation of a substituent. The terms "oligomer" or "oligomeric" when used herein designate compounds containing a plurality of polymerized units, but fewer than that number of polymerized units present in a polymer (e.g., chains of 5 to about 20 polymerized units are to be considered "oligomeric").

The fluoroaliphatic group $R_f$ and the fluorine-free aliphatic group are each linked to the organic portion (i.e. the oligomeric backbone or the unsaturated portion of the monomer) by a linking groups designated as $Q^4$ and $Q^5$ respectively in the formulas used herein. $Q^4$ and $Q^5$ are independently linking groups that may be a covalent bond, divalent alkylene, or a group that can result from the condensation reaction of a nucleophile such as an alcohol, an amine, or a thiol with and electrophile, such as an ester, acid halide, isocyanate, sulfonyl halide, sulfonyl ester, or may result from a displacement reaction between a nucleophile and leaving group. Each $Q^4$ and $Q^5$ are independently chosen, preferably contains from 1 to about 20 carbon atoms and can optionally contain catenary oxygen, nitrogen, sulfur, or silicon-containing groups or a combination thereof. $Q^4$ and $Q^5$ is preferably free of functional groups that substantially interfere with free-radical oligomerization (e.g., polymerizable olefinic double bonds, thiols, easily abstracted hydrogen atoms such as cumyl hydrogens, and other such functionality known to those skilled in the art). Examples of suitable linking groups $Q^4$ and $Q^5$ include straight chain, branched chain, or cyclic alkylene, arylene, aralkylene; oxy, oxo, hydroxy, thio, sulfonyl, sulfoxy, amino, imino, sulfonamido, carboxamido, carbonyloxy, urethanylene, urylene, and combinations thereof such as sulfonamidoalkylene. Preferably linking group $Q^4$ is a covalent bond or a sulfonamidoalkylene group. Preferably linking group $Q^5$ is a covalent bond.

Compounds of Formulas IV and V may be prepared by the methods described in U.S. Patent Nos. 6,391,807, 6,525,127 and 6,284,843 and U.S. 2004/0024262 (Jariwala et al.).

With respect to each class of described fluorochemical repellent additives, it is preferred that the $R_f$ groups thereof contain $C_3$ to $C_6$ perfluoroalkyl groups. It has been found that fluorochemical repellent additive having $C_3$-$C_6$ perfluoroalkyl groups, provide repellency and/or antisoiling properties comparable to those provided by higher fluoroalkyl radicals. Heretofore it has been believed that perfluoroalkyl groups having at least 8 carbon atoms were necessary for adequate performance, and the performance of lower perfluoroalkyl groups degraded with decreasing carbon number. The performance of the present compositions are surprising in view of teachings that the lower perfluoroalkyl groups were significantly less effective than longer chain perfluoroalkyl groups, such as the perfluorooctyl group. For example, it has been demonstrated that surfactants derived from perfluorocarboxylic acids and perfluorosulfonic acids exhibit considerable differences in performance as a function of chain length. See, for example Organofluorine Chemicals and their Industrial Applications, edited by R. E. Banks, Ellis Horwood Ltd. (1979), p56; J. O. Hendrichs, Ind. Eng Chem., 45, 1953, p103; M. K. Bernett and W. A. Zisman, J. Phys. Chem., 63, 1959, p1912.

Further, various models have been devised to explain the low surface energies and resultant high contact angle data of fluorinated polymer coatings that are based on a monolayer of a fluorinated carboxylic or sulfonic acids present at the air/liquid interface. The data suggest that only after the seven outermost carbon atoms of the fluoroalkyl group ($C_7F_{15}$-) were fully fluorinated did the contact angles (and therefore the surface energies) of various liquids on the surface approach those of a perfluorinated acid monolayer (see N. O. Brace, J. Org. Chem., 27,1962, p 4491 and W. A. Zisman, Advan. Chem, 1964, p. 22.). Therefore, one would expect that the performance of fluorinated coatings containing fluoroalkyl groups (e.g., coatings made by polymerizing fluoroalkyl (meth)acrylates) could be predicted from the known performance of perfluorocarboxylic and perfluorosulfonic acid derivatives, and the surface energy of the fluoropolymer coatings would be related to the chain length of the fluoroalkyl group of the fluoropolymer coating.

Fluorochemical compositions have achieved widespread use in a variety of applications, including, for example, in oil- and/or water-repellent compositions, and in surfactant compositions. Some known fluorochemical compositions ultimately degrade to perfluorooctyl-containing compounds when exposed to biological, thermal, oxidative, hydrolytic and photolytic conditions found in the environment. It has been reported that certain perfluorooctyl-containing compounds ($C_8F_{17}$-) may tend to bio-accumulate in living organisms; this tendency has been cited as a potential concern regarding some fluorochemical compositions. For example, see U.S. Pat. No. 5,688,884 (Baker et al.). As a result, there is a desire for fluorine-containing compositions effective in providing desired functional properties, e.g., water- and oil- repellency, surfactant properties, etc. while eliminating more effectively from biological systems.

The present compositions provide additional advantages. First, the fluorochemical repellent additives containing the shorter fluoroalkyl groups may be produced at a lower cost per weight because of higher yields while maintaining their potency as effective low surface energy coatings at the same weight basis. For example, the heptafluorobutyryl fluoride precursor may be prepared in yields of 60% as compared to perfluoro-octanoyl fluoride precursor (31%) in an electrochemical fluorination process (Preparation, Properties, and Industrial Applications of Organofluorine Compounds, edited by R. E. Banks, Ellis Horwood Ltd (1982), p 26). Furthermore, the short chain carboxylic acids (the presumed intermediate degradation products) are less toxic and less bioaccumulative than the longer chain homologues.

It is particularly desirable when formulating with an adhesive to include one or more nonfluorinated surfactants

which may enhance migration of the fluorochemical repellent additive and/or increase the repellency, and may be used to prepare stable fluorochemical an/or adhesive emulsions used in preparing the repellent articles. If used, one or more surfactants are generally added to the adhesive layer of the repellent article in an amount of at least about 0.05 wt-%, based on the total weight of the adhesive. Preferably, one or more surfactants are generally added in an amount of no greater than about 30 wt-%, more preferably no greater than about 20 wt-%, even more preferably no greater than about 10 wt-%, and most preferably no greater than about 5 wt-%, based on the total weight of the adhesive. Useful classes of surfactants include nonionic, anionic, cationic and amphoteric surfactants. Many of each type of surfactant are widely available to one skilled in the art. Accordingly, any surfactant or combination of surfactants may be employed. Such surfactants are also useful in making emulsion of the fluorochemical repellent additive prior to addition to the adhesive.

One useful class of nonionic surfactants include the condensation products of a higher aliphatic alcohol, such as a fatty alcohol, containing about 8 to about 20 carbon atoms, in a straight or branched chain configuration, condensed with about 3 to about 100 moles, preferably about 5 to about 40 moles, most preferably about 5 to about 20 moles of ethylene oxide. Examples of such nonionic ethoxylated fatty alcohol surfactants are the Tergitol™ 15-S series from Union Carbide and Brij™ surfactants from ICI. Tergitol™ 15-S Surfactants include $C_{11}$-$C_{15}$ secondary alcohol polyethyleneglycol ethers. Brij™97 surfactant is polyoxyethylene(10) oleyl ether; Brij™58 surfactant is polyoxyethylene(20) cetyl ether; and Brij™ 76 surfactant is polyoxyethylene(10) stearyl ether.

Another useful class of nonionic surfactants include the polyethylene oxide condensates of one mole of alkyl phenol containing from about 6 to 12 carbon atoms in a straight or branched chain configuration, with about 3 to about 100 moles, preferably about 5 to about 40 moles, most preferably about 5 to about 20 moles of ethylene oxide. Examples of nonreactive nonionic surfactants are the Igepal™ CO and CA series from Rhone-Poulenc. Igepal™CO surfactants include nonylphenoxy poly(ethyleneoxy) ethanols. Igepal™ CA surfactants include octylphenoxy poly(ethyleneoxy) ethanols.

Another useful class of nonionic surfactants includes block copolymers of ethylene oxide and propylene oxide or butylene oxide with HLB (hydrophilic/lipophilic balance) values of about 6 to about 19, preferably about 9 to about 18, and most preferably about 10 to about 16. Examples of such nonionic block copolymer surfactants (known as poloxamers) are the Pluronic™ and Tetronic™series of surfactants from BASF. Pluronic™ surfactants include ethylene oxide- propylene oxide block copolymers. Tetronic™ surfactants include ethylene oxide-propylene oxide block copolymers. A preferred example is Polaxamer™ 124 or Pluronic™ L44, which are liquids at room temperature and have HLB values of 12 to 18.

Still other useful nonionic surfactants include sorbitan fatty acid esters, polyoxyethylene sorbitan fatty acid esters and polyoxyethylene stearates having HLBs of about 6 to about 19, preferably about 9 to about 18, and most preferably about 10 to about 16. Examples of such fatty acid ester nonionic surfactants are the Span™, Tween™, and Myrj™ surfactants from ICI (now Uniqema). Span™ surfactants include $C_{12}$ -$C_{18}$ sorbitan monoesters. Tween™ surfactants include poly(ethylene oxide) $C_{12}$ -$C_{18}$ sorbitan monoesters. Myrj™ surfactants include poly(ethylene oxide) stearates.

Particularly suitable hydrocarbon nonionic surfactants include polyoxyethylene alkyl ethers, polyoxyethylene alkyl-phenyl ethers, polyoxyethylene acyl esters, sorbitan fatty acid esters, polyoxyethylene alkylamines, polyoxyethylene alkylamides, polyoxyethylene lauryl ether, polyoxyethylene cetyl ether, polyoxyethylene stearyl ether, polyoxyethylene oleyl ether, polyoxyethylene octylphenyl ether, polyoxyethylene nonylphenyl ether, polyethylene glycol laurate, polyethylene glycol stearate, polyethylene glycol distearate, polyethylene glycol oleate, oxyethylene-oxypropylene block copolymer, sorbitan laurate, sorbitan stearate, sorbitan distearate, sorbitan oleate, sorbitan sesquioleate, sorbitan trioleate, polyoxyethylene sorbitan laurate, polyoxyethylene sorbitan stearate, polyoxyethylene sorbitan oleate, polyoxyethylene laurylamine, polyoxyethylene laurylamide, laurylamine acetate, hard beef tallow propylenediamine dioleate, ethoxylated tetramethyldecynediol, fluoroaliphatic polymeric ester, polyether-polysiloxane copolymer, and the like.

Useful anionic surfactants include, but are not limited to, alkali metal and (alkyl)ammonium salts of: 1) alkyl sulfates and sulfonates such as sodium dodecyl sulfate and potassium dodecanesulfonate; 2) sulfates of polyethoxylated derivatives of straight or branched chain aliphatic alcohols and carboxylic acids; 3) alkylbenzene or alkylnaphthalene sulfonates and sulfates such as sodium laurylbenzene-sulfonate; 4) ethoxylated and polyethoxylated alkyl and aralkyl alcohol carboxylates; 5) glycinates such as alkyl sarcosinates and alkyl glycinates; 6) sulfosuccinates including dialkyl sulfosuccinates; 7) isothionate derivatives; 8) N-acyltaurine derivatives such as sodium N-methyl-N-oleyltaurate); 9) amine oxides including alkyl and alkylamidoalkyldialkylamine oxides; and 10) alkyl phosphate mono or di-esters such as ethoxylated dodecyl alcohol phosphate ester, sodium salt.

Representative commercial examples of suitable anionic sulfonate surfactants include, for example, sodium lauryl sulfate, available as TEXAPON™ L-100 from Henkel Inc., Wilmington, DE, or as POLYSTE™ B-3 from Stepan Chemical Co, Northfield, IL; sodium 25 lauryl ether sulfate, available as POLYSTEP™ B-12 from Stepan Chemical Co., Northfield, IL; ammonium lauryl sulfate, available as STANDAPOL™ A from Henkel Inc., Wilmington, DE; and sodium dodecyl benzene sulfonate, available as SIPONATE™ DS-10 from Rhone-Poulenc, Inc., Cranberry, NJ, dialkyl sulfosuccinates, having the tradename AEROSOL™ OT, commercially available from Cytec Industries, West Paterson, N.J;

sodium methyl taurate (available under the trade designation NIKKOL™ CMT30 from Nikko Chemicals Co., Tokyo, Japan); secondary alkane sulfonates such as Hostapur™ SAS which is a Sodium ($C_{14}$-$C_{17}$)secondary alkane sulfonates (alpha-olefin sulfonates) available from Clariant Corp., Charlotte, N.C.; methyl-2-sulfoalkyl esters such as sodium methyl-2-sulfo($C_{12}$-$_{16}$)ester and disodium 2-sulfo($C_{12}$-$C_{16}$)fatty acid available from Stepan Company under the trade designation ALPHASTE™ PC-48; alkylsulfoacetates and alkylsulfosuccinates available as sodium laurylsulfoacetate (under the trade designation LANTHANOL™ LAL) and disodiumlaurethsulfosuccinate (STEPANMILD™ SL3), both from Stepan Company; alkylsulfates such as ammoniumlauryl sulfate commercially available under the trade designation STEPANOL™ AM from Stepan Company.

Representative commercial examples of suitable anionic phosphate surfactants include a mixture of mono-, di- and tri-(alkyltetraglycolether)-o-phosphoric acid esters generally referred to as trilaureth-4-phosphate commercially available under the trade designation HOSTAPHAT™ 340KL from Clariant Corp., as well as PPG-5 cetyl 10 phosphate available under the trade designation CRODAPHOST™ SG from Croda Inc., Parsipanny, N.J.

Representative commercial examples of suitable anionic amine oxide surfactants those commercially available under the trade designations AMMONYX™ LO, LMDO, and CO, which are lauryldimethylamine oxide, laurylamidopropyldimethylamine oxide, and cetyl amine oxide, all from Stepan Company.

Examples of useful amphoteric surfactants include alkyldimethyl amine oxides, alkylcarboxamidoalkylenedimethyl amine oxides, aminopropionates, sulfobetaines, alkyl betaines, alkylamidobetaines, dihydroxyethyl glycinates, imidazoline acetates, imidazoline propionates, ammonium carboxylate and ammonium sulfonate amphoterics and imidazoline sulfonates.

Representative commercial examples amphoteric surfactants include certain betaines such as cocobetaine and cocamidopropyl betaine (commercially available under the trade designations MACKAM™ CB-35 and MACKAM™ L from McIntyre Group Ltd., University Park, Ill.); monoacetates such as sodium lauroamphoacetate; diacetates such as disodium lauroamphoacetate; amino- and alkylamino-propionates such as lauraminopropionic acid (commercially available under the trade designations MACKAM 1L, MACKAM™ 2L, and MACKAM™ 151L, respectively, from McIntyre Group Ltd.) and cocamidopropylhydroxysultaine (commercially available as MACKAM™ 50-SB from McIntyre Group Ltd.).

Useful cationic surfactants include alkylammonium salts having the formula $C_nH_{2n+1}N(CH_3)_3X$, where X is $^-OH$, $^-Cl$, $^-Br$, $HSO_4$ or a combination thereof, and where n is an integer from 8 to 22, and the formula $C_nH_{2n+1}N(CH_3)_3X$, $C_nH_{2n+1}N(C_2H_5)_3X$, where X is as previous described and where n is an integer from 12 to 18; gemini surfactants, for example those having the formula: $[C_{16}H_{33}N(CH_3)_2C_mH_{2m+1}]X$, wherein m is an integer from 2 to 12 and X is as defined above; aralkylammonium salts such as, for example, benzalkonium salts; and cetylethylpiperidinium salts, for example, $C_6H_{33}N(C_2H_5)(C_5H_{10})X$, wherein X is as defined above.

Examples of suitable quaternary ammonium halide surfactants include, but are not limited to, trimethyl alkyl benzyl ammonium chloride, available as VARIQUAT™ 50MC from Witco Corp., Greenwich, Conn.; methylbis(2-hydroxyethyl)co-ammonium chloride or oleyl-ammonium chloride, available as ETHOQUAD™ C/12 and ETHOQUAD™ O/12, respectively, from Akzo Chemical Inc., Matawan, N.J.; and methyl polyoxyethylene octadecyl ammonium chloride, available as ETHOQUAD™ 18/25 from Akzo Chemical Inc., Matawan, N.J.

Examples of thermoplastic polymers for use in the thermoplastic polymer layer include polyesters, polyurethanes, polyamides and poly(alpha)olefins. Preferred thermoplastic polymers are poly(alpha)olefins. Poly(alpha) olefins can include the normally solid, homo-, co- and terpolymers of aliphatic mono- 1-olefins (alpha olefins) as they are generally recognized in the art. Usually, the monomers employed in making such poly(alpha)olefins contain about 2 to 10 carbon atoms per molecule, though higher molecular weight monomers sometimes are used as comonomers. The invention is applicable also to blends of the polymers and copolymers prepared mechanically or in situ. Examples of useful monomers that can be employed to prepare the thermoplastic polymers include ethylene, propylene, butene, pentene, 4-methyl-pentene, hexene, and octene, alone, or in admixture, or in sequential polymerization systems. Examples of preferred thermoplastic polymers include polyethylene, polypropylene, propylene/ethylene copolymers, polybutylene and blends thereof. Processes for preparing the thermoplastic polymers are well known, and the invention is not limited to a polymer made with a particular process.

The thermoplastic polymer layer may in the form of a film, membrane or fibrous layer and may be oriented or unoriented. As used herein, the terms "fiber" and "fibrous" refer to particulate matter, generally thermoplastic resin, wherein the length to diameter ratio of the particulate matter is greater than or equal to about 10. Fiber diameters may range from about 0.5 micron up to at least 1,000 microns. Each fiber may have a variety of cross-sectional geometries, may be solid or hollow, and may be colored by, e.g., incorporating dye or pigment into the polymer melt prior to extrusion. For purposes of this invention, a "film" is distinguished from a "membrane" in that any porosity present in a film does not transcend the entire thickness of the film, whereas at least some porosity present in a membrane does transcend the entire thickness of the membrane to provide a fluid conduit between opposing surfaces.

Useful fibrous thermoplastic polymer layers include woven, knitted, and nonwoven fabrics. The thermoplastic polymer layer may have any thickness, but typically, the thickness is in a range of from at least 10, 25, or 1000 micrometers

up to and including 0.5, 2.5, or even 5 millimeters or more. The thermoplastic polymer layer may be a single layer, or may comprise multiple layers of the same of different thermoplastic polymers. In one embodiment, the repellent article may have a construction such as $P^1P^2...P^{\Omega}A$, where $P^1$, $P^2$, to $P^{\Omega}$ represent thermoplastic polymer layers, and A represents an adhesive layer, having a repellent additive dispersed therein. Multilayer films can be made using a variety of equipment and a number of melt-processing techniques (typically, extrusion techniques) well known in the art. Such equipment and techniques are disclosed, for example, in U.S. Pat. Nos. 3,565,985 (Schrenk et al.), 5,427,842 (Bland et al.), 5,589,122 (Leonard et al.), 5,599,602 (Leonard et al.), and 5,660,922 (Herridge et al.).

The fibrous thermoplastic polymer layer may include non-woven webs manufactured by any of the commonly known processes for producing nonwoven webs. For example, the fibrous nonwoven web can be made by carded, air laid, spunlaced, spunbonding or melt-blowing techniques or combinations thereof. Spunbonded fibers are typically small diameter fibers that are formed by extruding molten thermoplastic polymer as filaments from a plurality of fine, usually circular capillaries of a spinneret with the diameter of the extruded fibers being rapidly reduced. Meltblown fibers are typically formed by extruding the molten thermoplastic material through a plurality of fine, usually circular, die capillaries as molten threads or filaments into a high velocity, usually heated gas (e.g. air) stream which attenuates the filaments of molten thermoplastic material to reduce their diameter. Thereafter, the meltblown fibers are carried by the high velocity gas stream and are deposited on a collecting surface to from a web of randomly disbursed meltblown fibers. Any of the non-woven webs may be made from a single type of fiber or two or more fibers that differ in the type of thermoplastic polymer and/or thickness.

Further details on the manufacturing method of non-woven webs of this invention may be found in Wente, Superfine Thermoplastic Fibers, 48 INDUS. ENG. CHEM. 1342(1956), or in Wente et al., Manufacture Of Superfine Organic Fibers, (Naval Research Laboratories Report No. 4364, 1954).

Where the polymer layer is a microporous membrane, the membranes have a structure that enables fluids to flow through them. The effective pore size is at least several times the mean free path of the flowing molecules, namely form several micrometers down to about 100 Angstroms. Such sheets are generally opaque, even when made of transparent material, because the surfaces and the internal structure scatter visible light.

There are several methods known in the art to prepare a microporous membranes. A preferred method for producing the microporous membranes of the present invention utilizes the phase separation phenomenon that utilizes either liquid- liquid or solid-liquid phase separation. The method for producing microporous structures using these techniques usually involves melt blending the polymer with a compatible liquid that is miscible with the polymer at the casting or extrusion temperature, forming a shaped article of the melt blend, and cooling the shaped article to a temperature at which the polymer phase separates from the compatible liquid. Microporosity can be imparted to the resultant structure by, for example, (i) orienting the structure in at least one direction; (ii) removing the compatible liquid and then orienting the structure in at least one direction; or (iii) orienting the structure in at least one direction and then removing the compatible liquid. The cooling step for films is usually accomplished by contacting the film with a chill roll. This results in a thin skin being formed on the side of the membranes that contacts the chill roll, which results in a decrease in the fluid flow through the film.

Such methods are described, for example, in U.S. Pat. Nos. 4,247,498 (Castro), 4,539,256 (Shipman), 4,726,989 (Mrozinski) and 4,867,881 (Kinzer). Particulate- filled microporous membranes such as those described in, for example, U.S. Pat. Nos. 4,777,073 (Sheth), 4,861,644 (Young et al.), and 5,176,953 (Jacoby et al.), as well as JP 61-264031 (Mitsubishi Kasei KK), can also be utilized. Microporosity can be imparted to such particulate-filled films by, for example, orienting the film in at least one direction.

The thermoplastic polymer layer, whether film, membrane or fibrous, may comprise a pattern of elevated areas or relatively thick portions, separated by valleys, or relatively thin portions. The elevated areas take the form of ridges, mounds, peaks, cylinders, grooves or other embossments which may be uniform or varied in shape and dimensions and are generally disposed in a regular arrangement or pattern. "Pattern" does not necessarily refer to a regular repeating array, but may mean a random array of features having the same or different sizes. Patterns suitable for the practice of this invention include four-sided square pyramids, truncated four-sided square pyramids, cones, straight lines, wavy lines, square or rectangular blocks, hemispheres, grooves and the like and are imparted to at least a portion of the thermoplastic polymer layer. An individual feature of the pattern is referred to as an embossment. The number and spacing of embossments, as well as the nature of the individual embossment, such as its depth, degree of sharp reflecting edges, and shape can be varied as well. The terms "pattern" and "embossment" are used without reference to the process of application.

A plurality of embossments may be formed on the thermoplastic polymer layer. There are typically about 5 to 20 embossments per lineal centimeter. The embossments can be of any suitable depth, as long as the mechanical properties of the films are sufficient for the desired end use after the embossments have been formed. The depth of an embossment typically ranges from 10 to about 90 percent of the thickness of the oriented thermoplastic film. Preferably, the depth of an embossment typically ranges from 25 to 75 percent of the thickness of the thermoplastic polymer.

Embossing refers to a process in which a pattern is impressed into the surface of an article. Embossing is

typically accomplished by means of a male pattern formed on a hard material such as a metal layer on an embossing roll. Those skilled in the art recognize that embossing can be done by several methods, including the use of a continuous tooled belt or sleeve. Preferred metal layers include those comprising nickel, copper, steel, and stainless steel. Patterns are typically acid etched or machined into the metal layer and can have a wide variety of sizes and shapes. Any pattern that can be scribed into a metal surface can be used in the practice of this invention. One useful embossing method is described in Assignee's U.S. 6,514,597, (Strobel et al.).

Embossing can be carried out by any means known in the art. The preferred method of embossing is to move the softened thermoplastic polymer layer (prior to coating with the adhesive layer) through a nip having an embossing surface. "Nip" refers to two rolls in proximity that apply pressure on a film when the film passes between them. The embossing surface contacts the film with sufficient force to create embossments in the softened surface of the thermoplastic polymer layer. The embossed surface is then cooled by any of a number of methods to reduce the temperature of the softened surface to below its softening temperature before the article has experienced a significant change in bulk properties resulting from prior orientation. Such methods include moving the film over one or more chilled rollers, delivering it to a water bath, or cooling by air or other gases, such as by use of an air knife.

Any adhesive suitable for use with thermoplastic polymers, that can also serve as a reservoir for fluorochemical repellent additives, and that is non-reactive toward the fluorochemical repellent additives, can be used in the present invention. Adhesives can include hot melt adhesives, actinic radiation reactive adhesives, and the like. The adhesives can be solvent-based adhesives, 100% solids adhesives, or latex-based adhesives. Reference may be made to Handbook of Pressure Sensitive Adhesive Technology, Second Edition, D. Satas, Editor, Van Nostrand, Rheinhold, 1989. Preferably the adhesive is a pressure sensitive adhesive. "Pressure sensitive adhesive" means an adhesive that is aggressively and permanently tacky at room temperature and firmly adheres to a variety of dissimilar surfaces upon mere contact without the need of more than finger or hand pressure, and has a sufficiently cohesive holding to an adherend and removed from smooth surfaces without leaving a residue.

Suitable pressure sensitive adhesives include, for example, those based on natural rubbers, synthetic rubbers, styrene block copolymers, polyvinyl ethers, poly (meth)acrylates (including both acrylates and methacrylates), polyurethanes, polyureas, polyolefins, and silicones. The pressure sensitive adhesive may comprise an inherently tacky material, or if desired, tackifiers may be added to a tacky or non-tacky base material to form the pressure sensitive adhesive. Useful tackifiers include, for example, rosin ester resins, aromatic hydrocarbon resins, aliphatic hydrocarbon resins, and terpene resins. Other materials can be added for special purposes, including, for example, plasticizers, hydrogenated butyl rubber, glass beads, conductive particles, filler, dyes, pigments, and combinations thereof.

Pressure sensitive adhesives are commercially available from a number of sources including, for example, 3M Company, Saint Paul, Minnesota. Further examples of useful pressure sensitive adhesives include those generally described in U.S. Pat. Nos. 4,112,213 (Waldman); 4,917,928 (Heinecke); 4,917,929 (Heinecke); 5,141,790 (Calhoun); 5,045,386 (Stan et al.); 5,229,207 (Paquette et al.); 5,296,277 (Wilson et al.); 5,670,557 (Dietz et al.); and 6,232,366 (Wang et al.).

The adhesive may comprise removable or repositionable adhesives. A removable adhesive typically has a peel strength less than a conventional aggressively tacking PSA, for example a 180 degree peel strength (from a painted steel substrate employing a peel rate of 30.5 cm/min) of less than 8 N/cm, more particularly less than 6 N/cm. For purposes of this invention, an adhesive is considered to be "removable", if after final application to an intended substrate the sheet material can be removed without damage to the substrate at the end of the intended life of the article at a rate in excess of 25 feet/hour (7.62 meters/hour) by hand with the optional use of heat. More preferably, the adhesive layer is a repositionable adhesive layer. For the purposes of this invention, "repositionable" refers to the ability to be, at least initially, repeatedly adhered to and removed from a substrate without substantial loss of adhesion capability. A repositionable adhesive usually has a peel strength, at least initially, to the substrate surface lower than that for a conventional aggressively tacky pressure sensitive adhesive.

Useful repositionable pressure sensitive adhesives include those described in U.S. Pat. No. 5,571,617 (Cooprider, et al.), entitled "Pressure Sensitive Adhesive Comprising Tacky Surface Active Microspheres"; or an adhesive from the class of adhesives based on solid inherently tacky, elastomeric microspheres, such as those disclosed in U.S. Pat. Nos. 3,691,140 (Silver), 3,857,731 (Merrill et al.), 4,166,152 (Baker et al.), although not limited to these examples.

The pressure sensitive adhesive layer may have any thickness. For example, the pressure sensitive adhesive layer may have a thickness in a range of from at least 25, 100, or 250 micrometers up to and including 500,1000, or 2500 micrometers or even more.

Depending on the specific thermoplastic polymer layer chosen and intended application, the pressure sensitive adhesive layer may be selected such that, it cannot be mechanically separated from the thermoplastic polymer layer without damaging the thermoplastic polymer layer. This may be desirable, for example, in the case that two thermoplastic polymer layers are bonded together by the pressure sensitive adhesive layer.

The pressure sensitive adhesive layer may be continuous, for example, as a continuous adhesive film or a continuous or coating on fibers at one major surface of the fabric. Alternatively, the pressure sensitive adhesive layer

can be a discontinuous layer. In one embodiment, the pressure sensitive adhesive layer may have the shape of an alphanumeric character or graphic image. Suitable methods for applying the pressure sensitive adhesive layer include, for example, roll coating, gravure coating, curtain coating, spray coating, screen printing, with the method typically chosen based on the type of coating desired.

The repellent article may further comprise an optional substrate that may be any solid material, and may have any shape. Suitable substrate materials include, for example, ceramics (e.g., tile, masonry), glass (e.g., windows), metal, cardboard, fabrics, and polymer films (e.g., coated or uncoated polymer films). More specifically, the substrate may be, for example, a motor vehicle, building, window, billboard, boat, wall, floor, door, or a combination thereof.

In one embodiment, the substrate may be a release liner, for example, to protect the adhesive before usage. Examples of release liners include silicone coated kraft paper, silicone coated polyethylene coated paper, silicone coated or non-coated polymeric materials such as polyethylene or polypropylene, as well as the aforementioned base materials coated with polymeric release agents such as silicone urea, urethanes, and long chain alkyl acrylates, such as generally described in U.S. Pat. Nos. 3,997,702 (Schurb et al.); 4,313,988 (Koshar et al.); 4,614,667 (Larson et al.); 5,202,190 (Kantner et al.); and 5,290,615 (Tushaus et al.). Suitable commercially available release liners include those available under the trade designation "POLYSLIK" from Rexam Release of Oakbrook, Illinois, and under the trade designation "EXHERE" from P.H. Glatfelter Company of Spring Grove, Pennsylvania.

In another embodiment, the substrate may be a polymer layer which may be the same as, or different from, the first polymer layer. In this embodiment, the repellent article may be a multilayer repellent article having little or no tackiness on exterior surfaces. The resultant repellent article may be thus used, for example, for any use known for repellent articles, but will typically have increased repellency compared to the component thermoplastic polymers from which it is made. For example, a repellent article may be prepared by bonding two layers of thermoplastic polymer with pressure sensitive adhesive comprising at least 1 percent by weight of at least one fluorochemical repellent additive.

The repellent article may be prepared by combining the fluorochemical repellent additive and the adhesive and coating the mixture onto the thermoplastic polymer layer. The agent and the pressure sensitive adhesive may be blended using any known mechanical means, such as shaking, stirring or mixing. In solvent- or emulsion-based adhesives, the adhesive is coated in an organic solvent and then dried. The adhesives (containing the fluorochemical repellent additive) may be coated by any variety of conventional coating techniques such as roll coating, spray coating, knife coating, die coating and the like.

The fluorochemical repellent additive is used in an amount sufficient to render the surface of the thermoplastic polymer layer repellent upon migration of the fluorochemical repellent additive. The fluorochemical repellent additive is typically used in an amount of at least about 1 wt.% based on the weight of the adhesive layer and more preferably in an amount of at least about 3 wt.%. The maximum amount of the fluorochemical repellent additive is not critical; however, in case of a repellent article consisting of only one layer of thermoplastic polymer, it is preferred to use the lowest amount possible so as not to impair the mechanical properties of the thermoplastic polymer layer. Generally, the amount of fluorochemical repellent additive is between about 1 wt.% and 45 wt.%, and more preferably between about 3 wt.% and 15 wt.%. If desired, the fluorochemical repellent additive may be added to the adhesive neat, as an emulsion or as a solution.

The repellent article is particularly useful as medical or surgical drapes, garments, protective films and barriers, carpet backings and outdoor fabrics.

As a barrier film, the article may be used in the installation of, or as a component of carpeting. The adhesive layer may be adhered to a foam pad of a carpet so that soils and spills do not soak into the foam. The thermoplastic polymer layer, in intimate contact with the carpeting may provide a renewable source of fluorochemical repellent additive, which may migrate from the adhesive to the thermoplastic film and into the carpet fibers, rendering them durably repellent.

In another embodiment, the article may provide a repellent surface for graphics, signage, and outdoor advertising, to render them resistant to water and graffiti. The article may be applied directly over the same by means of the adhesive layer.

In another embodiment, the article provides an easy-to-clean surface for floors, windows, furniture, counters, and workspaces in the form of films or sheets that may be adhered to the substrate surface and which will repel most soils. In one embodiment, the article may be used as a disposable work surface in any application where a readily cleaned surface is desirable. Such an article may be in the form of individual sheets, in a roll or in a set of stacked sheets. For example, a section of repellent article may be unwound from a roll and secured to a substrate with the adhesive layer. In another embodiment, the invention provides a plurality of articles in the form of a stack, such as an $(PA)_n$ construction where P represents the thermoplastic polymer layer, A represents the adhesive layer, and n is greater than 1, e.g. 2 to 100. Individual articles may be removed from the stack and used as desired, or the stack per se may be secured to a substrate surface by means of the adhesive layer of the lowermost article. Fresh repellent surfaces may be provided by removal of the uppermost article. In such a stack, the surface of the thermoplastic polymer layer may be treated with a release layer to allow subsequent sheets to be removed from the stack, or the construction may provide a release liner between adjacent articles. Alternatively, such articles may be provided with a removable or repositionable

adhesive. Such articles may be used, then disposed of when contaminated; ensuring a clean surface.

The invention is further illustrated by means of the following examples without the intention to limit the invention thereto.

## EXAMPLES

These examples are merely for illustrative purposes only and are not meant to be limiting on the scope of the appended claims. All parts, percentages, ratios, etc. in the examples and the rest of the specification are by weight, unless noted otherwise. Solvents and other reagents used were obtained from Aldrich Chemical Company; Milwaukee, Wisconsin unless otherwise noted.

### Test Method

### Surface Wetting Screening Test

This test is a qualitative measure of the surface wetting ability of a surface. A set volume of 10 microliters of one of the following: deionized water, isopropyl alcohol (IPA), solutions of water and IPA, or mineral oil were slowly deposited from a pipette directly onto the top surface of the material to be tested and observation was made whether the liquid droplet wets the surface or beads up during a period of up to 15 minutes. The results are presented as "Wets" if the droplet wets the surface or "Beads Up" if the droplet beads up on the surface.

**Table of Abbreviations**

| Abbreviation or Trade Designation | Description |
|---|---|
| Adhesive-1 | A water-based latex adhesive prepared generally according to the procedure described in WO 01/81491 A1 (Loncar), Examples 6 and 7, by blending: 42.7 parts by weight of a dispersion of hollow tacky microspheres prepared as generally described in WO 92/13924 (Steelman, et al.), Example 1; 48.8 parts of an acrylate pressure-sensitive adhesive commercially available from 3M Company, St. Paul, MN, under the trade designation FASTBOND 49; 0.9 part by weight of an acrylic resin solution available from Rohm & Haas Company, Philadelphia, PA, under the trade designation ACRYSOL ASE-60; 2.5 parts by weight of n-octanol; 5 parts by weight of a mixture of 58 parts of water, 3 parts of lithium hydroxide monohydrate, and 39 parts of ammonium hydroxide; and 0.1 part by weight of a defoamer available under the trade designation FOAMASTER JMY from Cognis Corp., Ambler, PA. |
| Additive-1 | Fluorinated Acrylate Oligomer of Formula VII (approximately 30 wt. % solids), Prepared as described in U.S. 2004/0024262. Contains a $C_4F_9$-perfluoroalkyl group. |
| Additive-2 | Fluorochemical urethane, prepared as described in U.S. 2003/0136038. Contains a $C_4F_9$- perfluoroalkyl group. |
| Film-1 | A 15 micrometer thick extruded film of ESTANE 58237 thermoplastic polyurethane, available from Noveon, Inc., Cleveland, OH. |
| Film-2 | A 40 micrometer thick extruded film of HYTREL 4056 thermoplastic polyester elastomer, available from DuPont Engineering Polymers, Wilmington, DE. |
| Film-3 | CONTROLTAC PLUS Changeable Graphic Film 3500C, calendered polyvinyl chloride 100 micron thick, available from 3M Company, St. Paul, MN. |
| Fabric-1 | A spunbond nylon nonwoven fabric having a basis weight of 65 $g/m^2$ and a thickness of 0.15 mm (product number CEREX G066380), available from Western Nonwovens, Inc., Carson, CA. |
| Fabric-2 | A spunlaced PET/rayon (50/50) nonwoven fabric having a basis weight of 55 gsm, available from Green Bay Nonwovens, Inc., Green Bay, WI. |

(continued)

| Abbreviation or Trade Designation | Description |
|---|---|
| Fabric-3 | A woven PET/SPANDEX elastic fabric (Product Number SR 823) available from American Fiber and Finishing, Inc., Albemarle, NC. |
| Fabric-4 | Refers to a multicomponent fiber web having a basis weight of 100 $g/m^2$ and a thickness of 0.30 mm prepared by melt blown fiber production techniques according generally to the procedure of Backing Sample 16 in U.S. Patent No. 6,107,219 (Joseph). The multicomponent fibers had a hot melt adhesive component (20 percent by weight) and a polyurethane component (80 percent by weight). |
| Fabric-5 | Nonwoven flashspun High Density Polyethylene fabric, Product Number TYVEK 1042B, having a basis weight of 40.7 $g/m^2$, available from E.I. du Pont de Nemours and Company, Wilmington, DE. |
| Microporous Membrane | A sample of a polypropylene based microporous membrane prepared by the thermally induced phase separation technique (US 4,539,256 -Shipman et al., US 4,726,989; US 5,120,594 - Mrozinski). Sample was 144 micron thick, 40% porosity, and with 0.8 micrometer pore size |
| Liner - 1 | PET release liner of with release agent on both sides, SCOTCHPAK TPK 6752 available from 3M Company, St. Paul, MN. |
| Liner - 2 | PET liner HOSTAPHAN 4507 available from Mitsubishi Polyester Film Co., Tokyo, Japan. |
| PET | Poly(ethylene terephthalate) |
| Mineral Oil | Mineral oil Type NDC 0869-0831-43 available from Cumberland Swan, Inc., Smyrna, TN. |

**Example 1**

Part I: Preparation of Adhesive Sample

A mixture of Adhesive-1 and 10 % by weight of Additive-1 was prepared and coated at a thickness of 150 microns with a doctor knife onto Liner - 1, and allowed to dry at room temperature for three days to give a dry adhesive thickness of approximately 60 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Film-1. The release liners were removed from each of these tapes and the adhesive sides of each tape was laminated to a glass slide to form a 3 layer laminate. One laminate was placed to age in an 85°C oven, the second laminate was aged at room temperature. The sample laminates were tested daily for up to 9 days by the Surface Wetting Screening Test using the test method described above. The results are shown in Table 1.

**Example 2**

Part I: Preparation of Adhesive Sample

A mixture of Adhesive-1 and 10 % by weight of Additive-2 was prepared and coated at a thickness of 150 microns with a doctor knife onto Liner - 1, and allowed to dry at room temperature for three days to give a dry adhesive thickness of approximately 60 microns. The final solids concentration of Additive-2 in the dried adhesive was approximately 8 % by weight.

Part II: Preparation and Testing of Laminates

Two tapes of the adhesive sample prepared in Part I above were prepared by laminating adhesive samples to two samples of Film - 1. The release liners were removed from each of these tapes and the adhesive sides of each tape was laminated to a glass slide to form a 3 layer laminate. One laminate was placed to age in an 85°C oven, the second laminate was aged at room temperature. The sample laminates were tested daily for up to 9 days by the Surface Wetting Screening Test using the test method described above. The results are shown in Table 1.

**Comparative Example C1**

Part I: Preparation of Adhesive Sample

Adhesive-1 with no additive was coated as described for Example 1, Part I above.

Part II: Preparation and Testing of Laminates

Two tapes of the adhesive sample prepared in Part I above were prepared by laminating adhesive samples to two samples of Film - 1. The release liners were removed from each of these tapes and the adhesive sides of each tape was laminated to a glass slide to form a 3 layer laminate. One laminate was placed to age in an 85°C oven, the second laminate was aged at room temperature. The sample laminates were tested daily for up to 9 days by the Surface Wetting Screening Test using the test method described above. The results are shown in Table 1.

**Example 3**

Part I: Preparation of Adhesive Sample

A mixture of Adhesive-1 and 10 % by weight of Additive-1 was prepared and coated at a thickness of 150 microns with a doctor knife onto Liner - 1, and allowed to dry at room temperature for three days to give a dry adhesive thickness of approximately 60 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Fabric-1. The release liners were removed from each of these tapes and the adhesive sides of each tape was laminated to a glass slide to form a 3 layer laminate. One laminate was placed to age in an 85°C oven, the second laminate was aged at room temperature. The sample laminates were tested daily for up to 27 days by the Surface Wetting Screening Test using the test method described above. The results are shown in Table 1.

**Example 4**

Part I: Preparation of Adhesive Sample

A mixture of Adhesive-1 and 10 % by weight of Additive-2 was prepared and coated at a thickness of 150 microns with a doctor knife onto Liner - 1, and allowed to dry at room temperature for three days to give a dry adhesive thickness of approximately 60 microns. The final solids concentration of Additive-2 in the dried adhesive was approximately 8 % by weight.

Part 11: Preparation and Testing of Laminates

Two tapes of the adhesive sample prepared in Part I above were prepared by laminating adhesive samples to two samples of Fabric-1. The release liners were removed from each of these tapes and the adhesive sides of each tape was laminated to a glass slide to form a 3-layer laminate. One laminate was placed to age in an 85°C oven, the second laminate was aged at room temperature. The sample laminates were tested daily for up to 27 days by the Surface Wetting Screening Test using the test method described above. The results are shown in Table 1.

**Comparative Example C2**

Part I: Preparation of Adhesive Sample

Adhesive-1 with no additive was coated as described for Example 4, Part I above.

Part fl: Preparation and Testing of Laminates

Two tapes of the adhesive sample prepared in Part I above were prepared by laminating adhesive samples to two samples of Fabric-1. The release liners were removed from each of these tapes and the adhesive sides of each tape was laminated to a glass slide to form a 3-layer laminate. One laminate was placed to age in an 85°C oven, the second laminate was aged at room temperature. The sample laminates were tested daily for up to 27 days by the Surface Wetting Screening Test using the test method described above. The results are shown in Table 1.

**Example 5**

Part I: Preparation of Adhesive Sample

A mixture of Adhesive-1 and 10 % by weight of Additive-1 was prepared and coated at a thickness of 150 microns with a doctor knife onto Liner - 1, and allowed to dry at room temperature for three days to give a dry adhesive thickness of approximately 60 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Fabric-2. The release liners were removed from each of these tapes and the adhesive sides of each tape was laminated to a glass slide to form a 3-layer laminate. One laminate was placed to age in an 85°C oven, the second laminate was aged at room temperature. The sample laminates were tested daily for up to 27 days by the Surface Wetting Screening Test using the test method described above. The results are shown in Table 1.

**Example 6**

Part I: Preparation of Adhesive Sample

A mixture of Adhesive-1 and 10 % by weight of Additive-2 was prepared and coated at a thickness of 150 microns with a doctor knife onto Liner - 1, and allowed to dry at room temperature for three days to give a dry adhesive thickness of approximately 60 microns. The final solids concentration of Additive-2 in the dried adhesive was approximately 8 % by weight.

Part II: Preparation and Testing of Laminates

Two tapes of the adhesive sample prepared in Part I above were prepared by laminating adhesive samples to two samples of Fabric-2. The release liners were removed from each of these tapes and the adhesive sides of each tape was laminated to a glass slide to form a 3-layer laminate. One laminate was placed to age in an 85°C oven, the second laminate was aged at room temperature. The sample laminates were tested daily for up to 27 days by the Surface Wetting Screening Test using the test method described above. The results are shown in Table 1.

**Comparative Example C3**

Part I: Preparation of Adhesive Sample

Adhesive-1 with no additive was coated as described for Example 1, Part I above.

Part II: Preparation and Testing of Laminates

Two tapes of the adhesive sample prepared in Part I above were prepared by laminating adhesive samples to two samples of Fabric-2. The release liners were removed from each of these tapes and the adhesive sides of each

tape was laminated to a glass slide to form a 3-layer laminate. One laminate was placed to age in an 85°C oven, the second laminate was aged at room temperature. The sample laminates were tested daily for up to 27 days by the Surface Wetting Screening Test using the test method described above. The results are shown in Table 1.

**Example 7**

Part I: Preparation of Adhesive Sample

A mixture of Adhesive-1 and 10 % by weight of Additive-1 was prepared and coated at a thickness of 150 microns with a doctor knife onto Liner - 1, and allowed to dry at room temperature for three days to give a dry adhesive thickness of approximately 60 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Fabric-3. The release liners were removed from each of these tapes and the adhesive sides of each tape was laminated to a glass slide to form a 3-layer laminate. One laminate was placed to age in an 85°C oven, the second laminate was aged at room temperature. The sample laminates were tested daily for up to 27 days by the Surface Wetting Screening Test using the test method described above. The results are shown in Table 1.

**Example 8**

Part I: Preparation of Adhesive Sample

A mixture of Adhesive-1 and 10 % by weight of Additive-2 was prepared and coated at a thickness of 150 microns with a doctor knife onto Liner - 1, and allowed to dry at room temperature for three days to give a dry adhesive thickness of approximately 60 microns. The final solids concentration of Additive-2 in the dried adhesive was approximately 8 % by weight.

Part II: Preparation and Testing of Laminates

Two tapes of the adhesive sample prepared in Part I above were prepared by laminating adhesive samples to two samples of Fabric-3. The release liners were removed from each of these tapes and the adhesive sides of each tape was laminated to a glass slide to form a 3-layer laminate. One laminate was placed to age in an 85°C oven, the second laminate was aged at room temperature. The sample laminates were tested daily for up to 27 days by the Surface Wetting Screening Test using the test method described above. The results are shown in Table 1.

**Comparative Examples C4**

Part I: Preparation of Adhesive Sample

Adhesive-1 with no additive was coated as described for Example 1, Part I above.

Part II: Preparation and Testing of Laminates

Two tapes of the adhesive sample prepared in Part I above were prepared by laminating adhesive samples to two samples of Fabric-3. The release liners were removed from each of these tapes and the adhesive sides of each tape was laminated to a glass slide to form a 3-layer laminate. One laminate was placed to age in an 85°C oven, the second laminate was aged at room temperature. The sample laminates were tested daily for up to 27 days by the Surface Wetting Screening Test using the test method described above. The results are shown in Table 1.

**Example 9**

Part I: Preparation of Adhesive Sample

A mixture of Adhesive-1 and 10 % by weight of Additive-1 was prepared and coated at a thickness of 200 microns with a doctor knife onto Liner - 2, and allowed to dry at room temperature for two days to give a dry adhesive

thickness of approximately 80 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Fabric - 4. One laminate was placed to age in an 85°C oven; the second laminate was aged at room temperature. The sample laminates were tested frequently for up to 9 days by the Surface Wetting Screening Test using the test method described above. The results are shown in Table 1.

**Example 10**

Part I: Preparation of Adhesive Sample

A mixture of Adhesive-1 and 10 % by weight of Additive-2 was prepared and coated at a thickness of 200 microns with a doctor knife onto Liner - 2, and allowed to dry at room temperature for two days to give a dry adhesive thickness of approximately 80 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Fabric - 4. One laminate was placed to age in an 85°C oven; the second laminate was aged at room temperature. The sample laminates were tested frequently for up to 9 days by the Surface Wetting Screening Test using the test method described above. The results are shown in Table 1.

**Comparative Example C5**

Part I: Preparation of Adhesive Sample

Adhesive-1 with no additive was coated as described for Example 1, Part I above.

Part II: Preparation and Testing of Laminates

Two tapes of the adhesive sample prepared in Part I above were prepared by laminating adhesive samples to two samples of Fabric - 4. One laminate was placed to age in an 85°C oven; the second laminate was aged at room temperature. The sample laminates were tested frequently for up to 9 days by the Surface Wetting Screening Test using the test method described above. The results are shown in Table 1.

**Example 11**

Part I: Preparation of Adhesive Sample

A mixture of Adhesive-1 and 10 % by weight of Additive-1 was prepared and coated at a thickness of 200 microns with a doctor knife onto Liner - 2, and allowed to dry at room temperature for two days to give a dry adhesive thickness of approximately 80 microns. The final solids concentration of Additive-1 in the dried adhesive was approximately 8 % by weight.

Part 11: Preparation and Testing of Laminates

Two tapes of the adhesive sample prepared in Part I above were prepared by laminating adhesive samples to two samples of Fabric - 5. One laminate was placed to age in an 85°C oven; the second laminate was aged at room temperature. The sample laminates were tested frequently for up to 4 days by the Surface Wetting Screening Test using the test method described above. The results are shown in Table 1.

**Example 12**

Part I: Preparation of Adhesive Sample

A mixture of Adhesive-1 and 10 % by weight of Additive-2 was prepared and coated at a thickness of 200 microns with a doctor knife onto Liner - 2, and allowed to dry at room temperature for two days to give a dry adhesive thickness of approximately 80 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Fabric - 5. One laminate was placed to age in an 85°C oven; the second laminate was aged at room temperature. The sample laminates were tested frequently for up to 4 days by the Surface Wetting Screening Test using the test method described above. The results are shown in Table 1.

**Comparative Example C6**

Part I: Preparation of Adhesive Sample

Adhesive-1 with no additive was coated as described for Example 1, Part I above.

Part II: Preparation and Testing of Laminates

Two tapes of the adhesive sample prepared in Part I above were prepared by laminating adhesive samples to two samples of Fabric - 5. One laminate was placed to age in an 85°C oven; the second laminate was aged at room temperature. The sample laminates were tested frequently for up to 4 days by the Surface Wetting Screening Test using the test method described above. The results are shown in Table 1.

**Example 13**

Part I: Preparation of Adhesive Sample

A mixture of Adhesive-1 and 10 % by weight of Additive-1 was prepared and coated at a thickness of 200 microns with a doctor knife onto Liner - 2, and allowed to dry at room temperature for two days to give a dry adhesive thickness of approximately 80 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Film - 2. One laminate was placed to age in an 85°C oven; the second laminate was aged at room temperature. The sample laminates were tested frequently for up to 4 days by the Surface Wetting Screening Test using the test method described above. The results are shown in Table 1.

**Example 14**

Part I: Preparation of Adhesive Sample

A mixture of Adhesive-1 and 10 % by weight of Additive-2 was prepared and coated at a thickness of 200 microns with a doctor knife onto Liner - 2, and allowed to dry at room temperature for two days to give a dry adhesive thickness of approximately 80 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Film - 2. One laminate was placed to age in an 85°C oven; the second laminate was aged at room

temperature. The sample laminates were tested frequently for up to 4 days by the Surface Wetting Screening Test using the test method described above. The results are shown in Table 1.

**Comparative Example C7**

Part I: Preparation of Adhesive Sample

Adhesive-1 with no additive was coated as described for Example 1, Part I above.

Part II: Preparation and Testing of Laminates

Two tapes of the adhesive sample prepared in Part I above were prepared by laminating adhesive samples to two samples of Film - 2. One laminate was placed to age in an 85°C oven; the second laminate was aged at room temperature. The sample laminates were tested frequently for up to 4 days by the Surface Wetting Screening Test using the test method described above. The results are shown in Table 1.

**Example 15**

Part I: Preparation of Adhesive Sample

A mixture of Adhesive-1 and 10 % by weight of Additive-1 was prepared and coated at a thickness of 200 microns with a doctor knife onto Liner - 2, and allowed to dry at room temperature for two days to give a dry adhesive thickness of approximately 80 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Film - 3. One laminate was placed to age in an 85°C oven; the second laminate was aged at room temperature. The sample laminates were tested frequently for up to 9 days by the Surface Wetting Screening Test using the test method described above. The results are shown in Table 1.

**Example 16**

Part I: Preparation of Adhesive Sample

A mixture of Adhesive-1 and 10 % by weight of Additive-2 was prepared and coated at a thickness of 200 microns with a doctor knife onto Liner - 2, and allowed to dry at room temperature for two days to give a dry adhesive thickness of approximately 80 microns. The final solids concentration of Additive-1 in the dried adhesive was approximately 8 % by weight.

Part II: Preparation and Testing_of Laminates

Two tapes of the adhesive sample prepared in Part I above were prepared by laminating adhesive samples to two samples of Film - 3. One laminate was placed to age in an 85°C oven; the second laminate was aged at room temperature. The sample laminates were tested frequently for up to 9 days by the Surface Wetting Screening Test using the test method described above. The results are shown in Table 1.

**Comparative Example C8**

Part I: Preparation of Adhesive Sample

Adhesive-1 with no additive was coated as described for Example I, Part I above.

Part II: Preparation and Testing of Laminates

Two tapes of the adhesive sample prepared in Part I above were prepared by laminating adhesive samples to two samples of Film - 3. One laminate was placed to age in an 85°C oven; the second laminate was aged at room

temperature. The sample laminates were tested frequently for up to 9 days by the Surface Wetting Screening Test using the test method described above. The results are shown in Table 1.

**Example 17**

Part I: Preparation of Adhesive Sample

A mixture of Adhesive-1 and 10 % by weight of Additive-1 was prepared and coated at a thickness of 200 microns with a doctor knife onto Liner - 2, and allowed to dry at room temperature for two days to give a dry adhesive thickness of approximately 80 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Microporous Membrane. One laminate was placed to age in an 85°C oven; the second laminate was aged at room temperature. The sample laminates were tested frequently for up to 9 days by the Surface Wetting Screening Test using the test method described above. The results are shown in Table 1.

**Example 18**

Part I: Preparation of Adhesive Sample

A mixture of Adhesive-1 and 10 % by weight of Additive-2 was prepared and coated at a thickness of 200 microns with a doctor knife onto Liner - 2, and allowed to dry at room temperature for two days to give a dry adhesive thickness of approximately 80 microns. The final solids concentration of Additive-1 in the dried adhesive was approximately 8 % by weight.

Part II: Preparation and Testing of Laminates

Two tapes of the adhesive sample prepared in Part I above were prepared by laminating adhesive samples to two samples of Microporous Membrane. One laminate was placed to age in an 85°C oven; the second laminate was aged at room temperature. The sample laminates were tested frequently for up to 9 days by the Surface Wetting Screening Test using the test method described above. The results are shown in Table 1.

**Comparative Example C9**

Part I: Preparation of Adhesive Sample

Adhesive-1 with no additive was coated as described for Example 1, Part I above.

Part II: Preparation and Testing of Laminates

Two tapes of the adhesive sample prepared in Part I above were prepared by laminating adhesive samples to two samples of Microporous Membrane. One laminate was placed to age in an 85°C oven; the second laminate was aged at room temperature. The sample laminates were tested frequently for up to 9 days by the Surface Wetting Screening Test using the test method described above. The results are shown in Table 1.

**Table 1**

| Example | Test Liquid | Aging Temperature [°C] | Aging Time [days] | Surface Wetting |
|---|---|---|---|---|
| 1 | Deionized Water | Room Temperature | 9 | Beaded Up |
| 1 | Deionized Water | 85°C | 9 | Beaded Up |
| 2 | Deionized Water | Room Temperature | 9 | Beaded Up |
| 2 | Deionized Water | 85°C | 9 | Beaded Up * |
| C1 | Deionized Water | Room Temperature | 9 | Beaded Up |

(continued)

| Example | Test Liquid | Aging Temperature [°C] | Aging Time [days] | Surface Wetting |
|---|---|---|---|---|
| C1 | Deionized Water | 85°C | 9 | Beaded Up |
| 3 | Deionized Water | Room Temperature | 27 | Wets |
| 3 | Deionized Water | 85°C | 6 | Beaded Up |
| 4 | Deionized Water | Room Temperature | 27 | Wets |
| 4 | Deionized Water | 85°C | 27 | Wets |
| C2 | Deionized Water | Room Temperature | 27 | Wets |
| C2 | Deionized Water | 85°C | 27 | Wets |
| 5 | Deionized Water | Room Temperature | 27 | Wets |
| 5 | Deionized Water | 85°C | 27 | Wets |
| 6 | Deionized Water | Room Temperature | 27 | Wets |
| 6 | Deionized Water | 85°C | 27 | Wets |
| C3 | Deionized Water | Room Temperature | 27 | Wets |
| C3 | Deionized Water | 85°C | 27 | Wets |
| 7 | Deionized Water | Room Temperature | 27 | Wets |
| 7 | Deionized Water | 85°C | 6 | Beads Up |
| 8 | Deionized Water | Room Temperature | 27 | Wets |
| 8 | Deionized Water | 85°C | 27 | Wets |
| C4 | Deionized Water | Room Temperature | 27 | Wets |
| C4 | Deionized Water | 85°C | 27 | Wets |
| 9 | 80/20 Water/IPA solution | Room Temperature | 9 | Beads Up |
| 9 | 80/20 Water/IPA solution | 85°C | 7 | Beads Up |
| 10 | 80/20 Water/IPA solution | Room Temperature | 9 | Beads Up |
| 10 | 80/20 Water/IPA solution | 85°C | 7 | Beads Up |
| C5 | 80/20 Water/IPA solution | Room Temperature | 9 | Wets |
| C5 | 80/20 Water/IPA solution | 85°C | 7 | Wets |
| 11 | 80/20 Water/IPA solution | Room Temperature | 4 | Wets |
| 11 | 80/20 Water/IPA solution | 85°C | 4 | Beads Up |
| 12 | 80/20 Water/IPA solution | Room Temperature | 4 | Wets |
| 12 | 80/20 Water/IPA solution | 85°C | 4 | Wets |
| C6 | 80/20 Water/IPA solution | Room Temperature | 4 | Wets |
| C6 | 80/20 Water/IPA solution | 85°C | 4 | Wets |
| 13 | 90/10 Water/IPA solution | Room Temperature | 4 | Wets |
| 13 | 90/10 Water/IPA solution | 85°C | 4 | Beads Up |
| 14 | 90/10 Water/IPA solution | Room Temperature | 4 | Beads Up |
| 14 | 90/10 Water/IPA solution | 85°C | 4 | Beads Up |
| C7 | 90/10 Water/IPA solution | Room Temperature | 4 | Wets |
| C7 | 90/10 Water/IPA solution | 85°C | 4 | Wets |
| 15 | Isopropyl Alcohol | Room Temperature | 9 | Wets |

(continued)

| Example | Test Liquid | Aging Temperature [°C] | Aging Time [days] | Surface Wetting |
|---|---|---|---|---|
| 15 | Isopropyl Alcohol | 85°C | 7 | Beads Up |
| 16 | Isopropyl Alcohol | Room Temperature | 9 | Wets |
| 16 | Isopropyl Alcohol | 85°C | 7 | Wets |
| C8 | Isopropyl Alcohol | Room Temperature | 9 | Wets |
| C8 | Isopropyl Alcohol | 85°C | 7 | Wets |
| 17 | 80/20 Water/IPA solution | Room Temperature | 4 | Beads Up |
| 17 | 80/20 Water/IPA solution | 85°C | 1 | Beads Up |
| 17 | Mineral Oil | Room Temperature | 9 | Wets |
| 17 | Mineral Oil | 85°C | 9 | Beads Up |
| 18 | 80/20 Water/IPA solution | Room Temperature | 4 | Beads Up |
| 18 | 80/20 Water/IPA solution | 85°C | 1 | Beads Up |
| 18 | Mineral Oil | Room Temperature | 9 | Wets |
| 18 | Mineral Oil | 85°C | 9 | Beads Up |
| C9 | 80/20 Water/IPA solution | Room Temperature | 4 | Wets |
| C9 | 80/20 Water/IPA solution | 85°C | 1 | Wets |
| C9 | Mineral Oil | Room Temperature | 9 | Wets |
| C9 | Mineral Oil | 85°C | 9 | Wets |
| * This sample was observed to be distinctly more water repellant than the other samples as the beaded up water formed a more perfect ball. | | | | |

## Claims

1. A repellent article comprising:

   a thermoplastic polymer layer having a first surface and a second surface having an adhesive layer bonded to said second surface, said adhesive layer comprising a fluorochemical repellent additive that migrates to said first surface of said thermoplastic polymeric layer, wherein said fluorochemical repellent additive has a diffusion constant in the thermoplastic polymer layer of greater than $0.1 \times 10^{-10}$ $cm^2/s$ at 25°C.

2. The repellent article of claim 1 wherein said polymeric layer comprises films, porous membranes, microporous membranes, and fibrous polymer layers.

3. The repellent article of claim 1 wherein said fluorochemical repellent additive is selected from nonionic fluorochemical urethanes, ureas, esters, amides, carbodiimides, guanidines, oxazolidinones, isocyanurates, piperazines, oxazolidinones and biurets, fluorochemical acrylate oligomers, and blends thereof.

4. The repellent article of claim 3 wherein said fluorochemical repellent additive is of the formula

$$[R_f\text{-}Q^1]_p\text{-}R^1\text{-}[Q^2\text{-}R_h]_q \qquad (I)$$

   wherein:

   $R_f$ is a fluoroaliphatic group;
   $R^1$ is the residue of a mono- or polyfunctional compound;
   $R_h$ is an oleophilic organic group having from 1 to 100 carbon atoms;

$Q^1$ and $Q^2$ are each divalent linking groups;
p is at least 1;
q may be zero; and
p+q is equal to the valency of $R^1$.

**5.** The repellent article of claim 1 wherein said fluorochemical repellent additive is of the formula $[(A^2)_m\text{-}L]_nR^7$ or $(A^2)_m[L\text{-}R^7]_n$
wherein
m is 1 or 2;
n is 1 to 4 inclusive;
each L independently comprises a linking group;
each $R^7$ is a saturated or unsaturated aliphatic moiety; and
each $A^2$ is a fluorochemical oligomeric portion of the formula:

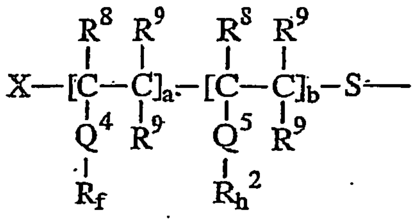

wherein a is at least 4, the sum of a + b is a number such that $A^2$ is oligomeric and comprises a plurality of pendent $R_f$ and optionally $R_h{}^2$ groups in ratios (a:b) of ≥ 4;
$R^8$ is hydrogen, halogen, or straight chain or branched chain alkyl containing 1 to about 4 carbon atoms;
each $R^9$ is independently hydrogen or straight chain or branched chain alkyl containing 1 to about 4 carbon atoms;
$Q^4$ and $Q^5$ are each independently a covalent bond or an organic linking group;
$R_f$ is a fluoroaliphatic group;
$R_h{}^2$ is a fluorine-free aliphatic group; and
X is a hydrogen atom or a group derived from a free radical initiator.

**6.** The repellent article of claim 1 wherein said fluorochemical repellent additive is present in an amount sufficient to provide said thermoplastic polymer layer with and advancing water contact angle of 85° or greater and/or an advancing contact oil angle of 50° or greater.

**7.** The repellent article of claim 1 wherein said adhesive layer comprises at least 1 wt.% of said fluorochemical repellent additive.

**8.** The repellent article of claim 1 therein said polymeric layer is selected from polyesters, polyurethanes, polyamides and poly(alpha)olefins

**9.** The repellent article of claim 1 further comprising a release liner.

**10.** The repellent article of claim 1, wherein said fluorochemical repellent additive dispersed in said adhesive comprises an delivery system to facilitate the migration of such additives from the adhesive layer into adjoining thermoplastic polymer layer; and provide for replenishment of the additive.

**11.** The repellent article of claim 1, wherein said fluorochemical repellent additive has a diffusion constant of greater than $10 \times 10^{-10}$ $cm^2/s$ at 25°C in said thermoplastic polymer layer.

**12.** The repellent article of claim 1, wherein said fluorochemical repellent additive has a diffusion constant of greater than $100 \times 10^{-10}$ $cm^2/s$ at 25°C in said thermoplastic polymer layer.

**13.** The repellent article of claim 1, further comprising a non-fluorochemical surfactant dispersed in said adhesive layer.

**14.** A method of preparing a repellent article according to any of claims 1-13 comprising coating a thermoplastic polymer layer with an adhesive layer, said adhesive layer comprising a fluorochemical repellent additive that comprises a

delivery system to facilitate the migration of such repellent additives from the adhesive layer into adjoining thermoplastic polymer layer, and provide for replenishment of the additive agent.

## Patentansprüche

**1.** Abweisender Gegenstand, umfassend:

eine Schicht aus thermoplastischem Polymer mit einer ersten Oberfläche und einer zweiten Oberfläche mit einer an die zweite Oberfläche gebundenen Klebstoffschicht, wobei die Klebstoffschicht ein fluorchemisches abweisendes Additiv umfaßt, das zur ersten Oberfläche der Schicht aus thermoplastischem Polymer wandert, wobei das fluorchemische abweisende Additiv eine Diffusionskonstante in der Schicht aus thermoplastischem Polymer von mehr als $0,1 \cdot 10^{-10}$ $cm^2/s$ bei 25°C aufweist.

**2.** Abweisender Gegenstand nach Anspruch 1, wobei die Polymerschicht Folien, poröse Membranen, mikroporöse Membranen und faserförmige Polymerschichten umfaßt.

**3.** Abweisender Gegenstand nach Anspruch 1, wobei das fluorchemische abweisende Additiv aus nichtionischen fluorchemischen Urethanen, Harnstoffen, Estern, Amiden, Carbodiimiden, Guanidinen, Oxazolidinonen, Isocyanuraten, Piperazinen, Oxazolidinonen und Biureten, fluorchemischen Acrylatoligomeren und Mischungen davon ausgewählt ist.

**4.** Abweisender Gegenstand nach Anspruch 3, wobei das fluorchemische abweisende Additiv die Formel

$$[R_f\text{-}Q^1]_p\text{-}R^1\text{-}[Q^2\text{-}R_h]_q \quad \text{(I)}$$

aufweist, wobei:

$R_f$ für eine fluoraliphatische Gruppe steht;
$R^1$ für den Rest einer mono- oder polyfunktionellen Verbindung steht;
$R_h$ für eine oleophile organische Gruppe mit 1 bis 100 Kohlenstoffatomen steht;
$Q^1$ und $Q^2$ jeweils für zweiwertige Brückengruppen stehen;
p für mindestens 1 steht;
q für null stehen kann und
p+q gleich der Wertigkeit von $R^1$ ist.

**5.** Abweisender Gegenstand nach Anspruch 1, wobei das fluorchemische abweisende Additiv die Formel

$$[(A^2)_m\text{-}L]_nR^7 \text{ oder } (A^2)_m[L\text{-}R^7]_n$$

aufweist, wobei
m für 1 oder 2 steht;
n für 1 bis 4 inklusive steht;
jedes L unabhängig für eine Brückengruppe steht;
jedes $R^7$ für eine gesättigte oder ungesättigte aliphatische Gruppierung steht und
jedes $A^2$ für einen fluorchemischen oligomeren Teil der Formel:

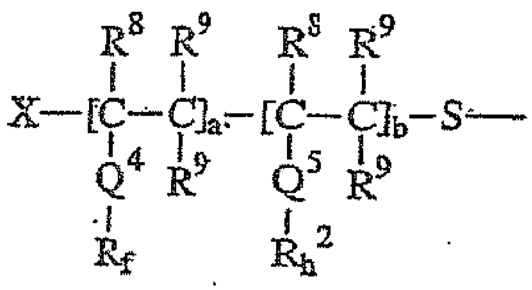

steht, wobei a für mindestens 4 steht und die Summe von a+b eine solche Zahl ist, daß $A^2$ oligomer ist und mehrere seitenständige $R_f$- und gegebenenfalls $R_n^2$-Gruppen in (a:b)-Verhältnissen ≥ 4 umfaßt; $R^8$ für Wasserstoff, Halogen oder geradkettiges oder verzweigtkettiges Alkyl mit 1 bis etwa 4 Kohlenstoffatomen steht;
jedes $R^9$ unabhängig für Wasserstoff oder geradkettiges oder verzweigtkettiges Alkyl mit 1 bis etwa 4 Kohlenstoffatomen steht;
$Q^4$ und $Q^5$ jeweils unabhängig für eine kovalente Bindung oder eine organische Brückengruppe stehen;
$R_f$ für eine fluoraliphatische Gruppe steht;
$R_h^2$ für eine fluorfreie aliphatische Gruppe steht und
X für ein Wasserstoffatom oder eine von einem radikalbildenden Initiator abgeleitete Gruppe steht.

**6.** Abweisender Gegenstand nach Anspruch 1, wobei das fluorchemische abweisende Additiv in einer ausreichenden Menge vorliegt, um die Schicht aus thermoplastischem Polymer mit einem Wasser-Fortschreitkontaktwinkel von 85° oder mehr und/oder einem Öl-Fortschreitkontaktwinkel von 50° oder mehr zu versehen.

**7.** Abweisender Gegenstand nach Anspruch 1, wobei die Klebstoffschicht mindestens 1 Gew.-% des fluorchemischen abweisenden Additivs umfaßt.

**8.** Abweisender Gegenstand nach Anspruch 1, wobei die Polymerschicht aus Polyestern, Polyurethanen, Polyamiden und Poly(alpha)olefinen ausgewählt ist.

**9.** Abweisender Gegenstand nach Anspruch 1, der ferner einen Releaseliner umfaßt.

**10.** Abweisender Gegenstand nach Anspruch 1, wobei das in dem Klebstoff dispergierte fluorchemische abweisende Additiv ein Zufuhrsystem zur Erleichterung der Wanderung derartiger Additive von der Klebstoffschicht in die benachbarte Schicht aus thermoplastischem Polymer und Bereitstellung von Nachschub des Additivs umfaßt.

**11.** Abweisender Gegenstand nach Anspruch 1, wobei das fluorchemische abweisende Additiv eine Diffusionskonstante von mehr als $10 \cdot 10^{-10}$ $cm^2/s$ bei 25°C in der Schicht aus thermoplastischem Polymer aufweist.

**12.** Abweisender Gegenstand nach Anspruch 1, wobei das fluorchemische abweisende Additiv eine Diffusionskonstante von mehr als $100 \cdot 10^{-10}$ $cm^2/s$ bei 25°C in der Schicht aus thermoplastischem Polymer aufweist.

**13.** Abweisender Gegenstand nach Anspruch 1, der ferner ein in der Klebstoffschicht dispergiertes nichtfluorchemisches Tensid umfaßt.

**14.** Verfahren zur Herstellung eines abweisenden Gegenstands nach einem der Ansprüche 1-13, bei dem man eine Schicht aus thermoplastischem Polymer mit einer Klebstoffschicht beschichtet, wobei die Klebstoffschicht ein fluorchemisches abweisendes Additiv umfaßt, das ein Zufuhrsystem zur Erleichterung der Wanderung derartiger abweisender Additive von der Klebstoffschicht in die benachbarte Schicht aus thermoplastischem Polymer und Bereitstellung von Nachschub des Additivs umfaßt.

**Revendications**

**1.** Article imperméabilisé comprenant :

une couche de polymère thermoplastique ayant une première surface et une seconde surface ayant une couche d'adhésif collée à ladite seconde surface, ladite couche d'adhésif comprenant un additif imperméabilisant chimique fluoré qui migre vers ladite première surface de ladite couche polymère thermoplastique, ledit additif imperméabilisant chimique fluoré ayant une constante de diffusion dans la couche de polymère thermoplastique supérieure à $0{,}1 \times 10^{-10}$ $cm^2/s$ à 25°C.

**2.** Article imperméabilisé selon la revendication 1, dans lequel ladite couche polymère comprend les films, les membranes poreuses, les membranes microporeuses et les couches de polymère fibreux.

**3.** Article imperméabilisé selon la revendication 1, dans lequel ledit additif imperméabilisant chimique fluoré est choisi parmi les uréthanes, urées, esters, amides, carbodiimides, guanidines, oxazolidinones, isocyanurates, pipérazines, oxazolidinones et biurets chimiques fluorés non ioniques, les oligomères d'acrylates chimiques fluorés et les mélanges de ceux-ci.

**4.** Article imperméabilisé selon la revendication 3, dans lequel ledit additif imperméabilisant chimique fluoré est représenté par la formule

$$[R_cQ^1]_p\text{-}R^1\text{-}[Q^2\text{-}R_h]_q \qquad (I)$$

dans laquelle :

$R_f$ est un groupe aliphatique fluoré ;
$R^1$ est le résidu d'un composé monofonctionnel ou polyfonctionnel ;
$R_h$ est un groupe organique oléophile ayant de 1 à 100 atomes de carbone ;
$Q^1$ et $Q^2$ sont chacun un groupe de liaison divalent ;
p vaut au moins 1 ;
q peut valoir 0 ; et
p + q est égal à la valence de $R^1$.

**5.** Article imperméabilisé selon la revendication 1, dans lequel ledit additif imperméabilisant chimique fluoré est représenté par la formule

$$[(A^2)_m\text{-}L]_nR^7 \text{ ou } (A^2)_m[L\text{-}R^7]_n$$

dans laquelle
m vaut 1 ou 2 ;
n vaut 1 à 4 inclus ;
chaque L indépendamment comprend un groupe de liaison ;
chaque $R^7$ est une fraction aliphatique saturée ou insaturée ; et
chaque $A^2$ est une partie oligomère chimique fluorée représentée par la formule :

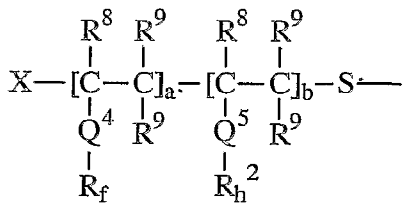

dans laquelle a vaut au moins 4, la somme de a + b est un nombre tel que $A^2$ est oligomère et comprend une pluralité de groupes $R_f$ et facultativement $R_h^2$ pendants en proportions (a:b) ≥ 4 ;
$R^8$ est un hydrogène, un halogène ou un alkyle à chaîne droite ou à chaîne ramifiée contenant 1 à environ 4 atomes de carbone ;
chaque $R^9$ est indépendamment un hydrogène ou un alkyle à chaîne droite ou à chaîne ramifiée contenant 1 à environ 4 atomes de carbone ;
$Q^4$ et $Q^5$ sont chacun indépendamment une liaison covalente ou un groupe de liaison organique ;
$R_f$ est un groupe aliphatique fluoré ;
$R_h^2$ est un groupe aliphatique exempt de fluor ; et
X est un atome d'hydrogène ou un groupe dérivé d'un initiateur de radicaux libres.

**6.** Article imperméabilisé selon la revendication 1, dans lequel ledit additif imperméabilisant chimique fluoré est présent en une quantité suffisante pour conférer à ladite couche de polymère thermoplastique un angle de contact rentrant avec l'eau supérieur ou égal à 85° et/ou un angle de contact rentrant avec l'huile supérieur ou égal à 50°.

**7.** Article imperméabilisé selon la revendication 1, dans lequel ladite couche d'adhésif comprend au moins 1 % en poids dudit additif imperméabilisant chimique fluoré.

**8.** Article imperméabilisé selon la revendication 1, dans lequel ladite couche polymère est choisie parmi les polyesters,

les polyuréthanes, les polyamides et les poly(alpha)oléfines.

**9.** Article imperméabilisé selon la revendication 1, comprenant en outre une doublure détachable.

**10.** Article imperméabilisé selon la revendication 1, dans lequel ledit additif imperméabilisant chimique fluoré dispersé dans ledit adhésif comprend un système de distribution pour faciliter la migration de tels additifs de la couche d'adhésif vers la couche de polymère thermoplastique voisine et permettre la remise à niveau de la quantité de l'additif.

**11.** Article imperméabilisé selon la revendication 1, dans lequel ledit additif imperméabilisant chimique fluoré a une constante de diffusion supérieure à $10 \times 10^{-10}$ $cm^2/s$ à 25 °C dans ladite couche de polymère thermoplastique.

**12.** Article imperméabilisé selon la revendication 1, dans lequel ledit additif imperméabilisant chimique fluoré a une constante de diffusion supérieure à $100 \times 10^{-10}$ $cm^2/s$ à 25 °C dans ladite couche de polymère thermoplastique.

**13.** Article imperméabilisé selon la revendication 1, comprenant en outre un tensioactif qui n'est pas un produit chimique fluoré dispersé dans ladite couche d'adhésif.

**14.** Procédé de préparation d'un article imperméabilisé selon l'une quelconque des revendications 1-13, comprenant le recouvrement d'une couche de polymère thermoplastique par une couche d'adhésif, ladite couche d'adhésif comprenant un additif imperméabilisant chimique fluoré qui comprend un système de distribution pour faciliter la migration de tels additifs imperméabilisants de la couche d'adhésif vers la couche de polymère thermoplastique voisine et permettre la remise à niveau de la quantité de l'agent additif.

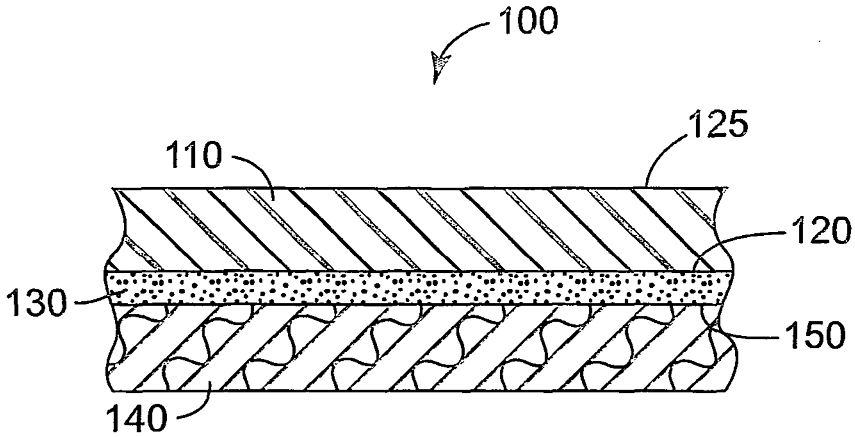
100
125
110
120
130
150
140

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9218569 A
- WO 9501396 A
- US 6132844 A
- US 6127485 A, Klun
- US 5459188 A
- US 5577390 A, Raiford
- US 5898046 A, Raiford
- US 6297304 A, Raiford
- US 20030136938 A1
- US 5025052 A
- US 5099026 A, Crater
- US 5451622 A, Boardman
- US 6391807 B
- US 6525127 B
- US 6284843 B
- US 20040024262 A, Jariwala
- US 5688884 A, Baker
- US 3565985 A, Schrenk
- US 5427842 A, Bland
- US 5589122 A, Leonard
- US 5599602 A, Leonard
- US 5660922 A, Herridge
- US 4247498 A, Castro
- US 4539256 A, Shipman
- US 4726989 A, Mrozinski
- US 4867881 A, Kinzer
- US 4777073 A, Sheth
- US 4861644 A, Young
- US 5176953 A, Jacoby
- JP 61264031 A
- US 6514597 B, Strobel
- US 4112213 A, Waldman
- US 4917928 A, Heinecke
- US 4917929 A, Heinecke
- US 5141790 A, Calhoun
- US 5045386 A, Stan
- US 5229207 A, Paquette
- US 5296277 A, Wilson
- US 5670557 A, Dietz
- US 6232366 B, Wang
- US 5571617 A, Cooprider
- US 3691140 A, Silver
- US 3857731 A, Merrill
- US 4166152 A, Baker
- US 3997702 A, Schurb
- US 4313988 A, Koshar
- US 4614667 A, Larson
- US 5202190 A, Kantner
- US 5290615 A, Tushaus
- US 20030136038 A
- US 5120594 A


### Non-patent literature cited in the description


- **J. Crank.** The Mathematics of Diffusion. Clarendon Press, 1975
- **Katritzky et al.** Design and Synthesis of Novel Fluorinated Surfactants for Hydrocarbon Subphases. *Langmuir,* 1988, vol. 4 (3), 732-735
- Organofluorine Chemicals and their Industrial Applications. Ellis Horwood Ltd, 1979, 56
- **J. O. Hendrichs.** *Ind. Eng Chem.,* 1953, vol. 45, 103
- **M. K. Bernett ; W. A. Zisman.** *J. Phys. Chem.,* 1959, vol. 63, 1912
- **N. O. Brace.** *J. Org. Chem.,* 1962, vol. 27, 4491
- **W. A. Zisman.** *Advan. Chem,* 1964, 22
- Preparation, Properties, and Industrial Applications of Organofluorine Compounds. Ellis Horwood Ltd, 1982, 26
- **Wente.** Superfine Thermoplastic Fibers. *INDUS. ENG. CHEM.,* 1956, vol. 48, 1342
- **Wente et al.** Manufacture Of Superfine Organic Fibers. Naval Research Laboratories Report No. 4364, 1954
- Handbook of Pressure Sensitive Adhesive Technology. Rheinhold, 1989